# EUROPEAN PATENT APPLICATION

(11) **EP 4 651 273 A2**
(43) Date of publication of application: **19.11.2025**
(21) Application number: 25167351.3
(22) Date of filing: 31.03.2025
(51) Int. Cl.: H01M 50/107, H01M 50/152, H01M 50/167, H01M 50/533, H01M 50/536

(54) **CYLINDRICAL BATTERY AND MANUFACTURING METHOD OF CYLINDRICAL BATTERY**

(30) Priority: 19.04.2024 CN 202410479662
(71) Applicant: AESC Japan Ltd., Yokohama-Shi, Kanagawa 220-0012 (JP)
(72) Inventor: GONG, Zhijie, Wuxi City, Jiangsu Province, 214443 (CN); HUANG, Qiu, Wuxi City, Jiangsu Province, 214443 (CN)
(74) Representative: Becker, Eberhard

(57) **Abstract**

A cylindrical battery (100), an electronic device (300), and a manufacturing method of the cylindrical battery (100) is provided. The cylindrical battery (100) includes a housing (110), an electrode assembly (120) disposed within the housing (110), and a current collecting member (130) electrically connected to the electrode assembly (120). The housing (110) includes a sidewall (111) formed with an opening (112). The position of the sidewall (111) near the opening (112) includes a groove (113). The current collecting member (13is at least partially disposed between the electrode assembly (120) and the groove (113), and includes a current collecting body (131) and a connecting piece (132) attached to the current collecting body (131). The connecting piece (132) is bent towards the axis of the housing (110) and welded to the surface of the groove (113) facing the electrode assembly (120) to form a welded part (140).

## Description

### BACKGROUND

### Technical Field

The present disclosure relates to the field of battery technology, specifically to a cylindrical battery, an electronic device, and a manufacturing method of the cylindrical battery.

### Description of Related Art

In the existing technology of cylindrical batteries, it is common practice to position a current collecting member near the opening of the housing. The current collecting member is typically welded at one end to the sidewall of the housing, while the other end is electrically connected to the tab of the electrode assembly, thereby establishing an electrical connection between the housing and the electrode assembly. However, during subsequent assembly processes, the housing undergoes additional procedures such as grooving and sealing at the opening area. These operations have the potential to damage the welded junction between the current collecting member and the housing. Consequently, this may lead to a failure in the electrical connection between the electrode assembly and the housing, thereby reducing the yield rate of cylindrical batteries.

### SUMMARY

Given the drawbacks of the existing technology mentioned above, the present disclosure provides a cylindrical battery, an electronic device, and a manufacturing method of the cylindrical battery, which improve the technical problem of electrical connection failure easily occurred between the electrode assembly and the housing during the production process of cylindrical batteries.

To achieve the above-mentioned purpose and other related purposes, the present disclosure provides a cylindrical battery, which includes: a housing, an electrode assembly, and a current collecting member; the housing includes a sidewall, and one end of the sidewall is formed with an opening; the position near the opening of the sidewall includes a groove that is recessed towards the interior of the housing; the electrode assembly is disposed inside the housing, and the groove limits the displacement of the electrode assembly in the axial direction of the housing; the current collecting member is at least partially disposed between the electrode assembly and the groove; wherein, the current collecting member includes a current collecting body and a connecting piece connected to the periphery of the current collecting body. The current collecting body is electrically connected to the electrode assembly. The connecting piece is bent towards the axis of the housing and welded to the surface of the groove facing the electrode assembly to form a welded part. A gap exists between a part of the connecting piece between the welded part and the periphery of the current collecting body and the sidewall.

In an example of the cylindrical battery of the present disclosure, a part of the connecting piece between the welded part and the periphery of the current collecting body is not in contact with the sidewall.

In an example of the cylindrical battery of the present disclosure, an entire portion of the connecting piece between the welded part and the periphery of the current collecting body is not in contact with the sidewall along the circumferential direction of the sidewall.

In an example of the cylindrical battery of the present disclosure, the current collecting member includes multiple connecting pieces, with the multiple connecting pieces arranged around the periphery of the current collecting body.

In an example of the cylindrical battery of the present disclosure, the connecting piece includes a first connecting part and a second connecting part that are connected together. A part between the welded part and the current collecting body is the first connecting part, the second connecting part is extended towards the interior of the housing from one end of the first connecting part near the welded part; wherein, the first connecting part is bent relative to the second connecting part to form a first bending part.

In an example of the cylindrical battery of the present disclosure, the thickness of the connecting piece is 0.1mm to 0.3mm.

In an example of the cylindrical battery of the present disclosure, the first bending part extends along the circumferential direction of the sidewall, and a first fragile structure is disposed on the first bending part.

In an example of the cylindrical battery of the present disclosure, the first fragile structure includes a thinned area disposed on the first bending part.

In an example of the cylindrical battery of the present disclosure, the first fragile structure includes a hollow area disposed on the first bending part.

In an example of the cylindrical battery of the present disclosure, the first connecting part is bent towards the center of the current collecting body relative to the current collecting body to form a second bending part.

In an example of the cylindrical battery of the present disclosure, a second fragile structure is disposed on the second bending part.

In an example of the cylindrical battery of the present disclosure, the unfolded length dimension from one end of the connecting piece connected to the current collecting body to the free end of the connecting piece is A, the minimum distance between the second bending part and the sidewall is Δ, the length of the second connecting part is F, the width dimension of the welded part along the extending direction of the second connecting part is W, and 0.2mm+W≤F≤0.05mm*A/Δ.

In an example of the cylindrical battery of the present disclosure, the length of the second connecting part is F, the width dimension of the welded part along the extending direction of the second connecting part is W, and 0.2mm+W≤F≤0.05mm/sin4.

In an example of the cylindrical battery of the present disclosure, the groove includes a first groove wall facing one side of the electrode assembly. The welded part includes a molten pool. The contour line of the molten pool on one side away from the axis of the housing intersects with the first groove wall to form a first intersection point on the axial cross-section of the cylindrical battery passing through the molten pool. An obtuse angle θ diverging from the axial direction of the housing is formed between the tangent line of the contour line passing through the first intersection point and the first groove wall.

In an example of the cylindrical battery of the present disclosure, at least a part of the central area of the current collecting body protrudes towards one side of the opening along the axial direction of the housing, and is higher than the peripheral area of the current collecting body covered by the groove.

The present disclosure further provides an electronic device, which includes a battery assembly, and the battery pack includes the cylindrical battery in any of the above examples.

The present disclosure further provides a manufacturing method of a cylindrical battery. The cylindrical battery includes a housing, an electrode assembly, a current collecting member and a cap. The housing includes a sidewall and one end of the sidewall is formed with an opening. The current collecting member includes a current collecting body and a connecting piece fixedly connected to the periphery of the current collecting body. The manufacturing method includes the following steps.

The current collecting body of the current collecting member is welded and connected with the tab of the electrode assembly to form a cell assembly part.

The cell assembly part is loaded into the housing through the opening.

The connecting piece is extended towards the opening side, and inclines to overlap with the sidewall of the housing to form a to-be-welded area between the connecting piece and the sidewall, and a gap exists between the sidewall and a part of the connecting piece between the to-be-welded area and the current collecting body.

The to-be-welded area is welded to form a welded part between the connecting piece and the sidewall.

The sidewall area corresponding to the welded part is roll-pressed to form a groove, and the groove is adopted to limit the axial displacement of the electrode assembly.

The cap is sealed and disposed at the opening.

In an example of the manufacturing method of the present disclosure, before welding the to-be-welded area, the inclination angle β between the connecting piece and the housing is set within a range of 1° to 4°.

In an example of the manufacturing method of the present disclosure, before welding the to-be-welded area, the distance between the contact end of the connecting piece with the sidewall and the connection end of the connecting piece with the current collecting body is A along the extending direction of the connecting piece, and 2mm≤A≤4mm.

In an example of the manufacturing method of the present disclosure, the distance between the to-be-welded area and the end wall of the connecting piece along the extending direction of the connecting piece is greater than or equal to 0.2mm.

In an example of the manufacturing method of the present disclosure, the distance between the connecting piece and the sidewall is less than or equal to 0.05mm along the radial direction of the housing within the to-be-welded area.

In an example of the manufacturing method of the present disclosure, laser welding is used when welding the to-be-welded area, where the laser beam generated by the welding head is directed from the interior of the housing towards the to-be-welded area, and the welding operation is performed at in a tilted posture to the sidewall.

In an example of the manufacturing method of the present disclosure, the range of the inclination angle γ between the laser beam generated by the welding head and the sidewall is 15° to 80°.

In the cylindrical battery of the present disclosure, the welded part is formed by welding the connecting piece disposed on the outer periphery of the current collecting body with the surface of the groove facing the electrode assembly. In this way, it is possible to allow the welded parts to be dispersedly disposed along the circumferential direction of the housing, thereby reducing the stress concentration generated between the current collecting member and the housing, so it is easier to ensure a stable connection between the current collecting member and the housing. Simultaneously, since a part of the connecting piece between the welded part and the current collecting body does not contact the sidewall, during the grooving process, this portion of the connecting piece between the welded part and the current collecting body is subjected to the compressive force from the corresponding position of the sidewall. Accordingly, it is possible to reduce the probability of the connecting piece displacing at the welded part position relative to the wall of the groove, thus effectively improving the stability of the welding connection between the connecting piece and the groove. As a result, such arrangement may enhance the stability of the electrical connection between the electrode assembly and the housing and improve the yield rate of the cylindrical battery, thereby ensuring the performance of the cylindrical battery.

In the manufacturing method of the cylindrical battery of the present disclosure, after the cell assembly part formed by welding the current collecting member and the electrode assembly is loaded into the housing, an inclined overlap is formed between the connecting piece and the sidewall. Such arrangement not only facilitates the insertion of the cell assembly part into the housing, improving the insertion efficiency, but also may achieve non-contact between the part of the connecting piece between the to-be-welded area and the current collecting body and the sidewall. This configuration may reduce the probability of contact between the part of the connecting piece between the welded part and the current collecting body and the sidewall after the housing is grooved, avoiding additional compressive force from the sidewall on the connecting piece at the welded part. Consequently, the arrangement may lower the probability of displacement of the connecting piece at the welded part position relative to the groove, ultimately improving the stability of the electrical connection between the connecting piece and the housing accordingly, and enhancing the yield rate of the cylindrical battery.

### BRIEF DESCRIPTION OF THE DRAWINGS

To more clearly illustrate the technical solutions in the embodiments of the present disclosure or in the prior art, a brief introduction of the drawings required in the description of the embodiments or the prior art will be given below. Clearly, the drawings described below are only some embodiments of the present disclosure. For those skilled in the art, other embodiments may be obtained based on these drawings without inventive effort.
FIG. 1 is a cross-sectional view of the overall structure of a cylindrical battery according to an embodiment of the present disclosure.
FIG. 2 is an enlarged partial view of area A in FIG. 1.
FIG. 3 is a schematic structural view of the position of the welded part after grooving in an embodiment of the cylindrical battery of the present disclosure.
FIG. 4 is a schematic structural view of the connecting piece after bending in an embodiment of the cylindrical battery of the present disclosure.
FIG. 5 is an enlarged partial view of area B in FIG. 4.
FIG. 6 is a schematic structural view of the connecting piece before bending in the embodiment of FIG. 4.
FIG. 7 is a cross-sectional view of the current collecting member in the embodiment of FIG. 6.
FIG. 8 is an enlarged partial view of area C in FIG. 7.
FIG. 9 is a schematic structural view of the connecting piece before bending in another embodiment of the cylindrical battery of the present disclosure.
FIG. 10 is a cross-sectional view of the current collecting member in the embodiment of FIG. 9.
FIG. 11 is an enlarged partial view of area D in FIG. 10.
FIG. 12 is a schematic view of another embodiment of the cylindrical battery of the present disclosure, where both the first bending part and the second bending part are provided with fragile structures.
FIG. 13 is an enlarged partial view of the welded part after grooving in an embodiment of the cylindrical battery of the present disclosure.
FIG. 14 is a schematic structural view of the opening side before grooving in an embodiment of the cylindrical battery of the present disclosure.
FIG. 15 is a schematic view of the welded position between the welding head and the connecting piece in an embodiment of the cylindrical battery of the present disclosure.
FIG. 16 is a schematic view of the position between the molten pool and the sidewall and connecting piece in an embodiment of the cylindrical battery of the present disclosure.
FIG. 17 is a partial schematic view of the overlapped position between the connecting piece and the sidewall before grooving in an embodiment of the cylindrical battery of the present disclosure.
FIG. 18 is a schematic view of the distribution position of the to-be-welded area between the connecting piece and the sidewall before grooving in an embodiment of the cylindrical battery of the present disclosure.
FIG. 19 is a schematic view of the welded position between the welding head and the sidewall before grooving in an embodiment of the cylindrical battery of the present disclosure.
FIG. 20 is a schematic view of the overall structure of an embodiment of the battery assembly of the present disclosure.
FIG. 21 is a schematic structural view of the battery assembly of the present disclosure disposed on a vehicle.
FIG. 22 is a flow chart of an embodiment of the manufacturing method of the cylindrical battery of the present disclosure.
FIG. 23 is a destruction effect diagram when the connecting piece on the 2# current collecting member is pulled apart from the welded part b.
FIG. 24 is a destruction effect diagram when the connecting piece on the 3# current collecting member is pulled apart from the welded part c.
FIG. 25 is a destruction effect diagram when the connecting piece on the 4# current collecting member is pulled apart from the welded part d.
FIG. 26 is a schematic view of the pull-apart test performed on the welded part formed between the connecting piece and the sidewall in the present disclosure.

### DESCRIPTION OF THE EMBODIMENTS

The following specific examples illustrate the embodiments of the present disclosure. Those skilled in the art may easily understand other advantages and effects of the present disclosure from the content disclosed in this specification. The present disclosure may also be implemented or applied through other different specific embodiments, and various modifications or changes may be made to the details in this specification based on different perspectives and applications without departing from the spirit of the present disclosure. It should be noted that, in the absence of conflict, the features in the following examples and embodiments may be combined with each other. It should also be understood that the terms used in the embodiments of the present disclosure are for describing specific embodiments and not for limiting the scope of protection of the present disclosure. For the test methods in the following examples where specific conditions are not specified, they are generally carried out under conventional conditions or according to the conditions recommended by respective manufacturers.

When an embodiment gives a range of values, it should be understood that, unless otherwise stated in the present disclosure, either endpoint of each value range as well as any value between the two endpoints may be selected. Unless otherwise defined, all technical and scientific terms used in the present disclosure are consistent with the understanding of those skilled in the art in the field of existing technology and the description of the present disclosure. The present disclosure may also be implemented using any methods, devices, and materials in existing technology that are similar or equivalent to the methods, devices, and materials described in the embodiments of the present disclosure.

It should be noted that terms such as "upper", "lower", "left", "right", "middle" and "one" cited in this specification are merely for clarity of description and not for limiting the scope in which the present disclosure may be implemented. Changes or adjustments in their relative relationships, without substantially changing the technical content, should also be considered within the scope in which the present disclosure may be implemented.

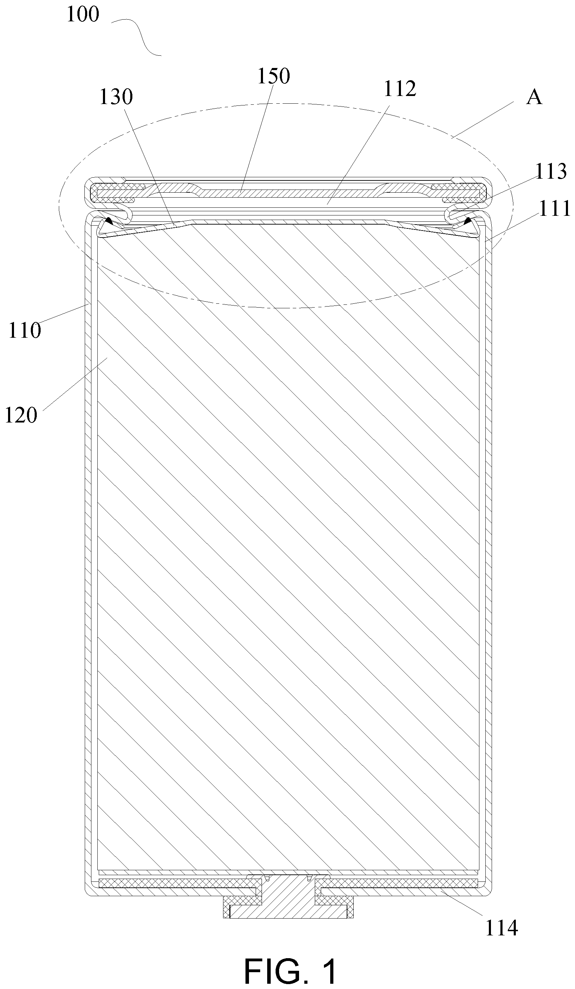

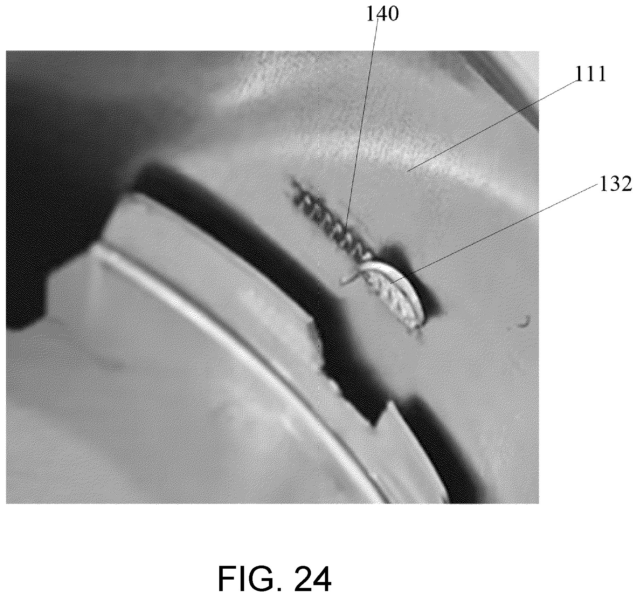

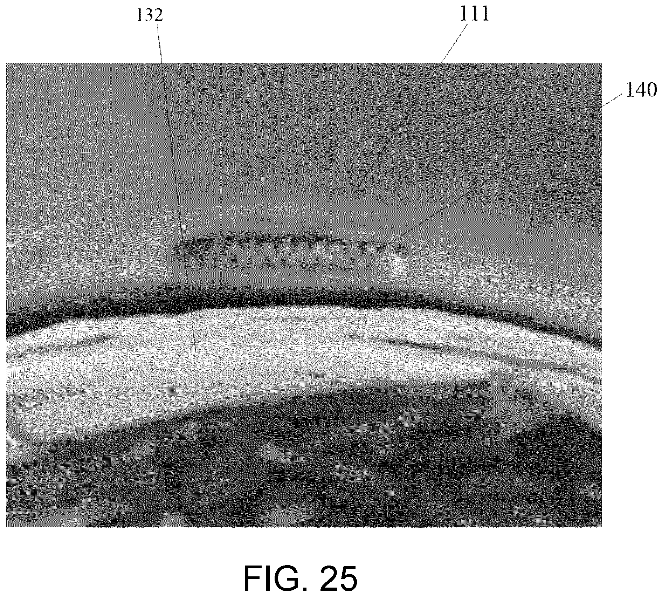

Please refer to FIG. 1 to FIG. 26, the present disclosure provides a cylindrical battery 100. When forming the groove 113 at the position of the opening 112 of the housing 110 of the cylindrical battery 100, the cylindrical battery 100 makes it possible to reduce the probability of displacement of the welded part 140 formed between the connecting piece 132 and the groove 113 during the grooving process. Such design effectively improves the stability of the welding connection between the connecting piece 132 and the groove 113, thereby enhancing the stability of the electrical connection between the electrode assembly 120 and the housing 110, and improving the yield rate and performance of the cylindrical battery 100.

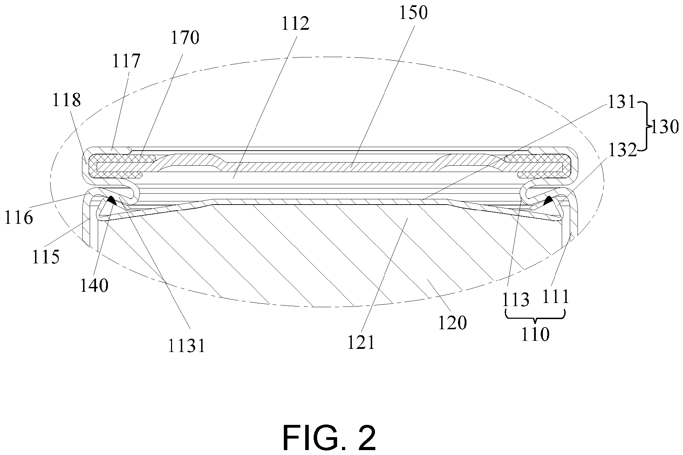

Please refer to FIG. 1 and FIG. 2, which further describe the structure of the cylindrical battery 100. The cylindrical battery 100 includes: a housing 110, an electrode assembly 120, and a current collecting member 130. The housing 110 is formed with an accommodating cavity for containing the electrode assembly 120, electrolyte, and other members. The housing 110 may have one open end or two open ends. The specific dimensions of the housing 110 may be determined according to the specific dimensions of the electrode assembly 120, for example, meeting the specifications of large cylindrical batteries such as 4680, 4695, 46120, etc. The material of the housing 110 may be various, such as copper, iron, aluminum, steel, aluminum alloy, etc. To prevent rusting of the housing 110 during long-term use, a layer of anti-rust material, such as metallic nickel, may also be plated on the surface of the housing 110.

Please refer to FIG. 1 to FIG. 3. In an example of the cylindrical battery 100 of the present disclosure, the housing 110 is a cylindrical structure. The housing 110 includes an end wall 114 and a sidewall 111 surrounding the end wall 114, that is, the housing 110 includes a closed end and an open end. The end wall 114 is the closed end, and the opening 112 opposite to the end wall 114 is the open end. The sidewall 111 is formed with a groove 113 that is recessed towards the interior of the housing 110 on one side facing the opening 112. The sidewall 111 is formed with a main body 115 between the groove 113 and the end wall 114, with the main body 115 extending along the height direction of the cylindrical battery 100. The sidewall 111 is formed with a transition part 116 between the groove 113 and one end of the main body 115 away from the end wall 114. The groove 113 is a recessed structure formed by the sidewall 111 being deformed and compressed towards the interior of the housing 110 under mechanical external force. The groove 113 may be formed by stamping the sidewall 111 through a molding die, or by rolling and pressing the sidewall 111 with a grooving tool, as long as the groove 113 on the sidewall 111 is a recessed structure surrounding the circumferential direction of the sidewall 111. The cross-sectional shape of the groove 113 may be rectangular, square, trapezoidal, or any shape that meets the usage requirements. The sidewall 111 also has an extension part 117 extending towards the center of the opening 112 on one side of the groove 113 near the opening 112. There is also a connecting part 118 between the extension part 117 and the groove 113, with the extension part 117 connected to the groove 113 through the connecting part 118. It should be noted that the specific dimensions of the groove 113, extension part 117, and connecting part 118 need to be determined according to the size specifications of the cylindrical battery 100. In this embodiment, no specific limitations are placed on these dimensions. The groove 113 has a first groove wall 1131 on one side divergent from the opening 112. One end of the first groove wall 1131 away from the center of the housing 110 is connected to one end of the transition part 116, and the other end of the transition part 116 is connected to one end of the main body 115 away from the end wall 114. The structural shape of the transition part 116 may be an arc surface structure, an inclined surface structure, or any structure that can achieve a smooth transition connection between the main body 115 and the groove 113.

As shown in FIG. 2, the electrode assembly 120 is accommodated within the housing 110. The electrode assembly 120 is the member where electrochemical reactions occur in the cylindrical battery 100. The housing 110 may contain one or more electrode assemblies 120. The electrode assembly 120 is mainly formed by winding or stacking positive electrode sheets and negative electrode sheets, and typically a separator is placed between the positive electrode sheets and negative electrode sheets. The positive electrode sheet includes a positive electrode current collector and a positive electrode active material layer, with the positive electrode active material layer coated on the surface of the positive electrode current collector. The positive electrode current collector includes a positive electrode coating area and a positive tab connected to the positive electrode coating area. The positive electrode coating area is coated with the positive electrode active material layer, while the positive tab is not coated with the positive electrode active material layer. The negative electrode sheet includes a negative electrode current collector and a negative electrode active material layer, with the negative electrode active material layer coated on the surface of the negative electrode current collector. The negative electrode current collector includes a negative electrode coating area and a negative tab connected to the negative electrode coating area. The negative electrode coating area is coated with the negative electrode active material layer, while the negative tab is not coated with the negative electrode active material layer. Taking a lithium-ion battery as an example, the material of the positive electrode current collector may be aluminum, and the positive electrode active material layer includes positive electrode active material, which may be lithium cobalt oxide, lithium iron phosphate, ternary lithium, or lithium manganese oxide, etc. The material of the negative electrode current collector may be copper, and the negative electrode active material layer includes negative electrode active material, which may be carbon or silicon, etc. The main base material of the separator may be PP or PE, etc. To provide protection and insulation for the electrode assembly 120, an insulating film may also be wrapped around the exterior of the electrode assembly 120. The insulating film may be synthesized from PP, PE, PET, PVC, or other polymer materials.

Please refer to FIG. 1 and FIG. 2. In an example of the cylindrical battery 100 of the present disclosure, the electrode assembly 120 is sealed and disposed within the housing 110. The electrode assembly 120 is disposed between the end wall 114 and the groove 113 along the height direction of the cylindrical battery 100, and the groove 113 may limit the axial movement of the electrode assembly 120 between the end wall 114 and the groove 113. The electrode assembly 120 has a first tab 121 and a second tab 122 disposed at both ends in the height direction of the cylindrical battery 100, with the first tab 121 and the second tab 122 having opposite polarities. The first tab 121 faces towards one side of the opening 112, and the first tab 121 is a negative tab. It should be noted that in other embodiments, the first tab 121 may also be a positive tab, and the second tab 122 may be a negative tab.

Please refer to FIG. 1 to FIG. 3. The cap 150 is disposed at the opening 112, with the outer periphery of the cap 150 engaged between the extension part 117, the connecting part 118, and the groove 113 through the sealing ring 170 to achieve a sealed and fixed connection of the cap 150 at the opening 112. The current collecting member 130 is disposed inside the housing 110, and located between the cap 150 and the electrode assembly 120. The current collecting member 130 includes a current collecting body 131 and a connecting piece 132 connected to the periphery of the current collecting body 131. There may be multiple choices for the connection method, for example, it may be a welding connection, or an integral connection, or any connection method that can achieve electrical connection between the connecting piece 132 and the current collecting body 131. In this embodiment, to improve assembly efficiency, the connecting piece 132 and the current collecting body 131 are integrally stamped and formed. The current collecting body 131 is electrically connected to the first tab 121, and there may be multiple choices for the electrical connection method, for example, the connection may be a welding connection, a conductive adhesive connection, or any method that can achieve electrical connection between the connecting piece 132 and the first tab 121. In this embodiment, the connection between the current collecting body 131 and the first tab 121 is a welding connection. It should be noted that the connecting piece 132 being disposed at the periphery of the current collecting body 131 means configuration along the radial direction of the current collecting body 131, and the connecting piece 132 is connected to the outer periphery of the current collecting body 131.

The connecting piece 132 is located between the first groove wall 1131 and the electrode assembly 120 along the height direction of the cylindrical battery 100. The number of connecting pieces 132 is not limited; it may be one or multiple. At the same time, there are no restrictions on the specific shape and area size of the connecting piece 132, as long as the connecting piece 132 is able to meet the requirements of welding strength and current guiding area between the connecting piece 132 and the housing 110. The connecting piece 132 is located on one side of the current collecting body 131 divergent from the electrode assembly 120. One end of the connecting piece 132 is connected to the periphery of the current collecting body 131, and the other end of the connecting piece 132 is bent towards the axis of the housing 110 and welded to the first groove wall 1131 to form the welded part 140. The specific shape of the bent connecting piece 132 is not limited in the present disclosure; for example, after bending, the connecting piece 132 may be approximately U-shaped, approximately triangular-shaped, etc., as long as it can be ensured that part of the area of the connecting piece 132 can form a welded part 140 with the first groove wall 1131 that meets the requirements of connection strength. By setting the connecting piece 132 at the periphery of the current collecting body 131, it is possible to facilitate the welding connection between the current collecting member 130 and the housing 110, and make the welded position between the current collecting member 130 and the housing 110 more flexible. There is a gap between a part of the connecting piece 132 between the welded part 140 and the periphery of the current collecting body 131 and the sidewall 111. The existence of a gap may refer to the presence of a gap between one or more of the following: a gap between a part of the connecting piece 132 between the welded part 140 and the periphery of the current collecting body 131 and the first groove wall 1131 located between the welded part 140 and the transition part 116; a gap between a part of the connecting piece 132 between the welded part 140 and the periphery of the current collecting body 131 and the inner wall of the transition part 116; and a gap between a part of the connecting piece 132 between the welded part 140 and the periphery of the current collecting body 131 and the inner wall of the main body 115 at a connection point with the transition part 116. The existence of a gap may mean there is a gap between any two of the above, or there may be gaps between all three.

With this arrangement, when grooving 113 is performed near the opening 112 of the housing 110, there is a gap between a part of the connecting piece 132 between the welded part 140 and the periphery of the current collecting body 131 and the sidewall 111. Therefore, it is possible to reduce the compressive force generated by the sidewall 111 on the welded part 140, which in turn may lower the probability of displacement of the connecting piece 132 at the welded part 140 relative to the wall of the groove 113. This effectively improves the stability of the welded connection between the connecting piece 132 and the groove 113, thereby correspondingly enhancing the stability of the electrical connection between the electrode assembly 120 and the housing 110 and the yield rate of the cylindrical battery 100, thus ensuring the performance of the cylindrical battery 100 in use.

Furthermore, in an example of the cylindrical battery 100 of the present disclosure, please refer to FIG. 1 and FIG. 2, a part of the connecting piece 132 between the welded part 140 and the periphery of the current collecting body 131 does not contact the sidewall 111. Specifically, "not contact" means that a part of the connecting piece 132 between the welded part 140 and the periphery of the current collecting body 131 does not contact any of the first groove wall 1131 between the welded part 140 and the transition part 116, the inner wall of the transition part 116, and the inner wall of the main body 115 at the connection position with the transition part 116. This arrangement may further reduce the compressive force generated by the sidewall 111 on a part of the connecting piece 132 between the welded part 140 and the periphery of the current collecting body 131 during forming the groove 113. Therefore, it is possible to further lower the probability of displacement of the connecting piece 132 at the welded part 140 relative to the wall of the groove 113, thus further improving the stability of the welding connection between the connecting piece 132 and the groove 113.

It should be noted that in this embodiment, the non-contact between a part of the connecting piece 132 between the welded part 140 and the periphery of the current collecting body 131 and the sidewall 111 means that an entire portion of the connecting piece 132 between the welded part 140 and the periphery of the current collecting body 131 does not contact the sidewall 111 along the circumferential direction of the sidewall 111. That is, a part of the connecting piece 132 between the welded part 140 and the periphery of the current collecting body 131 does not contact any of the first groove wall 1131 between the welded part 140 and the transition part 116, the inner wall of the transition part 116, and the inner wall of the main body 115 at the connection position with the transition part 116 along the circumferential direction of the sidewall 111.

Preferably, in an example of the cylindrical battery 100 of the present disclosure, please refer to FIG. 1 and FIG. 2, the current collecting member 130 includes multiple connecting pieces 132, which are arranged around the outer periphery of the current collecting body 131. The multiple connecting pieces 132 may have the same structure or different structures, as long as they meet the requirements of current guiding and welding strength between the current collecting member 130 and the housing 110. To facilitate the positioning connection between the connecting piece 132 and the current collecting member 130, in this embodiment, the multiple connecting pieces 132 have the same shape and are arranged in an array along the circumferential direction of the current collecting body 131. This arrangement may produce a more uniform current guiding effect in the circumferential direction between the current collecting member 130 and the sidewall 111, thereby improving the stability of current guidance between the housing 110 and the electrode assembly 120.

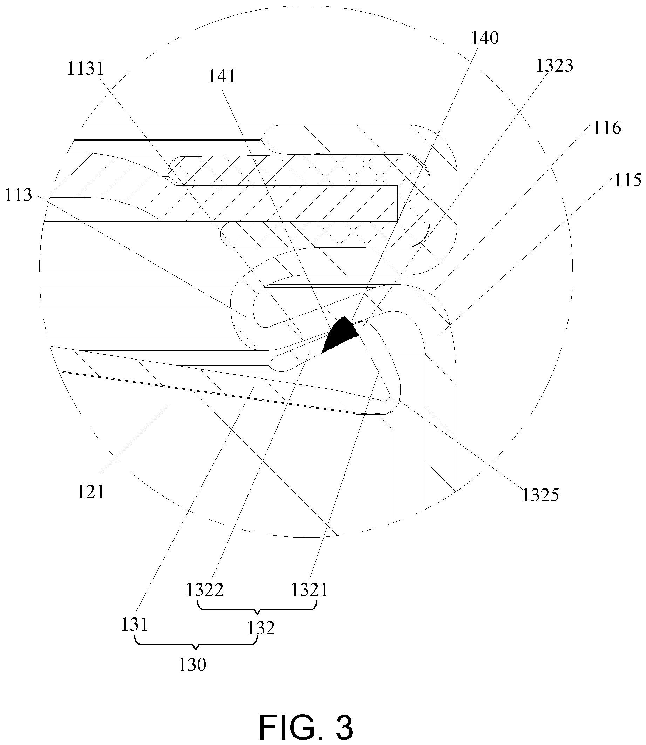

Although the connecting piece 132 located between the first groove wall 1131 and the current collecting body 131 may be bended in various forms, to facilitate welding between the connecting piece 132 and the sidewall 111, preferably, in an example of the cylindrical battery 100 of the present disclosure, please refer to FIG. 2 and FIG. 3, the connecting piece 132 includes a first connecting part 1321 and a second connecting part 1322 that are connected to each other. A part between the welded part and the current collecting body is the first connecting part, and the welded part 140 is formed between the second connecting part 1322 and the first groove wall 1131; the second connecting part 1322 extends towards the interior of the housing 110 from one end of the first connecting part 1321 near the welded part 140. The extending direction of the second connecting part 1322 may be consistent with the radial direction of the housing 110, or may be set at an angle with the radial direction of the housing 110, as long as it is ensured that a stable welded part 140 can be formed between the second connecting part 1322 and the first groove wall 1131. The second connecting part 1322 may be an approximately straight segment structure, or may be other curved structures that can achieve welding connection with the first groove wall 1131. Preferably, in this embodiment, the second connecting part 1322 is an approximately straight segment structure that extends in an inclined manner towards one side of the electrode assembly 120, which facilitates controlling the welding gap between the second connecting part 1322 and the first groove wall 1131, and helps to improving the controllability of the welding quality of the welded part 140.

One end of the first connecting part 1321 away from the current collecting body 131 is inclined towards the axial direction of the housing 110 along the height direction of the housing 110, forming a bending angle between the first connecting part 1321 and the second connecting part 1322, thereby forming a first bending part 1323 at one end of the first connecting part 1321 near the boundary. During the grooving process, the connecting piece 132 undergoes bending deformation, and the deformation stress generated by the bending deformation is partially transmitted to the welded part 140, causing a degree of damage to the welded part 140, and in some cases, the connecting piece 132 might fall off from the welded part 140 at the worst. In this embodiment, by setting up the first bending part 1323 at one end of the boundary near the sidewall 111, the bending deformation of the first bending part 1323 may effectively absorb part of the deformation stress, reducing the transmission of deformation stress from the first connecting part 1321 to the second connecting part 1322 during the grooving process. This may reduce the compressive damage to the welded part 140 caused by the deformation stress on the first connecting part 1321, thus effectively improving the stability of the welding connection between the connecting piece 132 and the sidewall 111.

To facilitate the bending deformation of the connecting piece 132 during the grooving process and reduce the deformation stress generated during the bending process of the connecting piece 132, preferably, in an example of the cylindrical battery 100 of the present disclosure, the thickness of the connecting piece 132 may be any value within the range of 0.1mm to 0.3mm, for example, the thickness of the connecting piece 132 may be 0.1mm, 0.2mm or 0.3mm. Limiting the thickness of the connecting piece 132 to this range not only facilitates the bending deformation of the connecting piece 132 during the grooving process, reducing the deformation stress generated on the connecting piece 132, effectively protecting the integrity of the welded part 140; but also meets the requirements of current guiding between the connecting piece 132 and the sidewall 111, thus ensuring the normal performance of the cylindrical battery 100.

Please refer to FIG. 2, FIG. 4 and FIG. 5. In an example of the cylindrical battery 100 of the present disclosure, the first bending part 1323 extends along the circumferential direction of the sidewall 111, and a first fragile structure 1324 is disposed on the first bending part 1323. The first fragile structure 1324 may be a local structure disposed in the middle or at both ends of the first bending part 1323 along the extending direction of the first bending part 1323, or may be an integral structure surrounding the entire first bending part 1323. The specific structural form of the first fragile structure 1324 may have multiple variations, for example, it may be a through-hole structure opened on the first bending part 1323, or a thinned area structure formed on the first bending part 1323, as long as the first fragile structure 1324 is able to reduce the bending strength of the first bending part 1323 and facilitate the bending molding of the first bending part 1323. By setting up the first fragile structure 1324 on the first bending part 1323, not only it is possible to facilitate the bending of the first bending part 1323, reducing the transmission of deformation stress generated by the first connecting part 1321 to the welded part 140, but also the first fragile structure 1324 may guide the bending of the first bending part 1323, improving the accuracy of the bending position of the first bending part 1323, which helps to improving the consistency of the assembly quality of the cylindrical battery 100. In addition, when welding the connecting piece 132 to the sidewall 111 before grooving, the first fragile structure 1324 may also serve as a reference line for the welded position, facilitating the positioning of the welding head during welding.

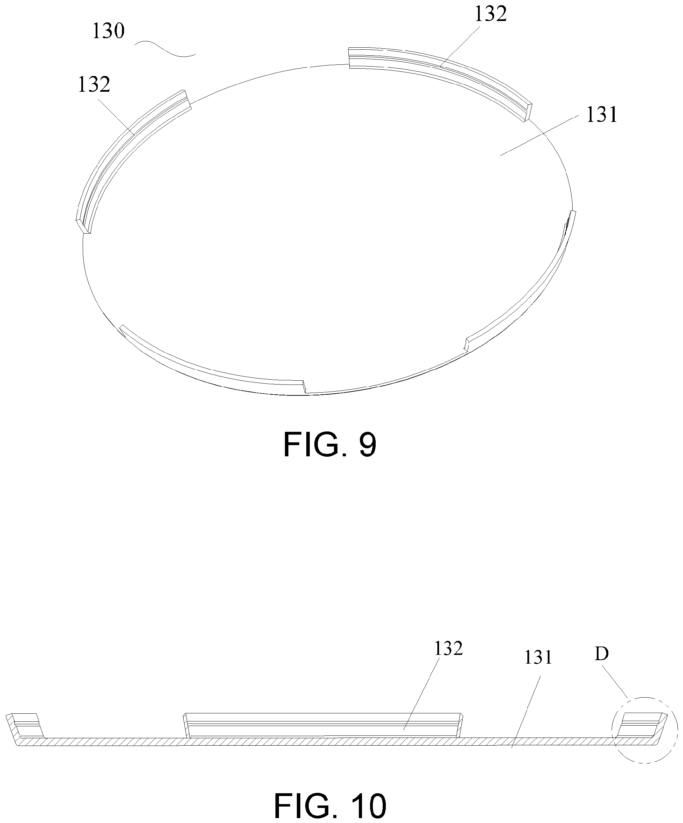

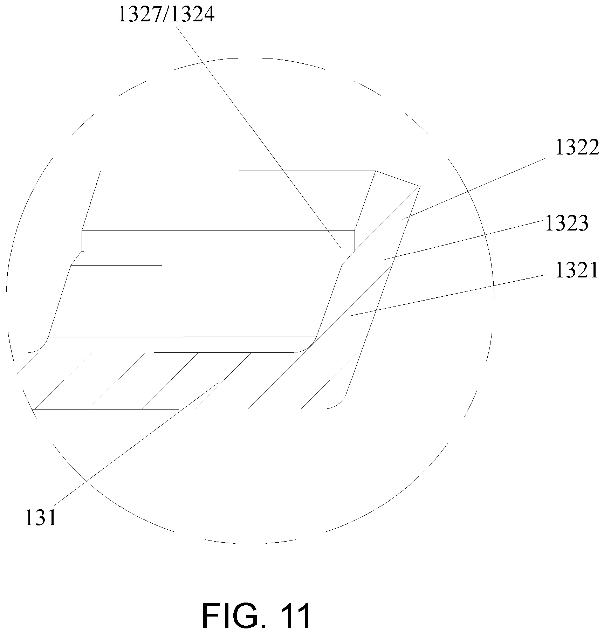

Preferably, please refer to FIG. 9 to FIG. 11. FIG. 9 is a schematic structural view of the connecting piece before bending in another embodiment of the cylindrical battery of the present disclosure. FIG. 10 is a cross-sectional view of the current collecting member in the embodiment of FIG. 9. FIG. 11 is an enlarged partial view of area D in FIG. 10. In an example of the cylindrical battery 100 of the present disclosure, the first fragile structure 1324 includes a thinned area 1327 disposed on the first bending part 1323. The thinned area 1327 may have multiple forms, for example, the thinned area 1327 may be an engraved area formed by engraving the surface of the first bending part 1323, or may be a thinned area formed by thinning operation on the surface of the first bending part 1323. By setting up the thinned area 1327 on the first bending part 1323, a fragile bending part may be formed on the first bending part 1323, reducing the bending strength of the first bending part 1323, which may further enable the connecting piece 132 to deform more timely and quickly in the area of the first bending part 1323 during the grooving process, thereby further reducing the transmission of deformation stress generated on one side of the first connecting part 1321 to the welded part 140. It should be noted that the thinned area 1327 may be disposed on the surface at one side of the first bending part 1323 facing the current collecting body 131, or may be disposed on the surface at one side of the first bending part 1323 diverging from the current collecting body 131. Preferably, in the embodiment, the thinned area 1327 is disposed on the surface at one side of the first bending part 1323 facing the current collecting body 131, which not only reduces the probability of tearing damage to the thinned area 1327 during the bending process, better ensuring the stability of the electrical connection between the connecting piece 132 and the housing 110; moreover, when the connecting piece 132 is welded to the sidewall 111 inside the housing 110, the thinned area 1327 disposed on the connecting piece 132 may also serve as a positioning reference for the welded position, thus facilitating the welding positioning between the connecting piece 132 and the sidewall 111.

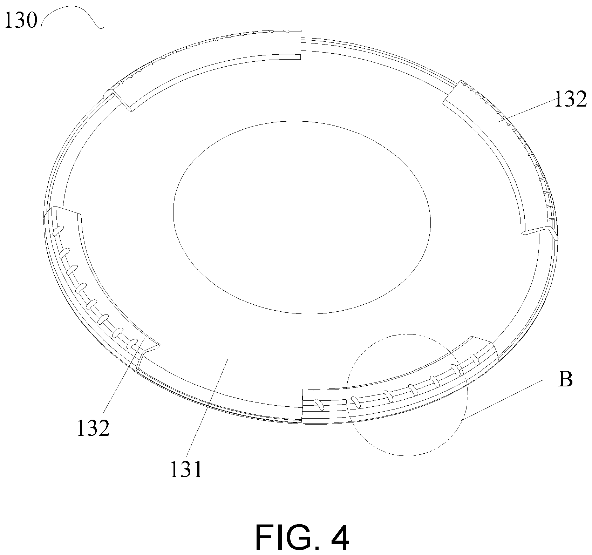

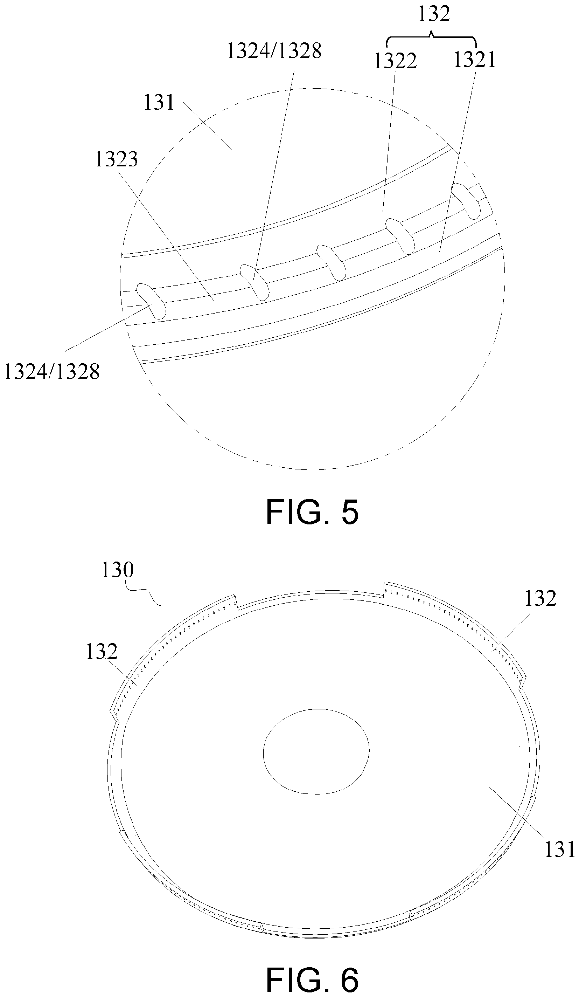

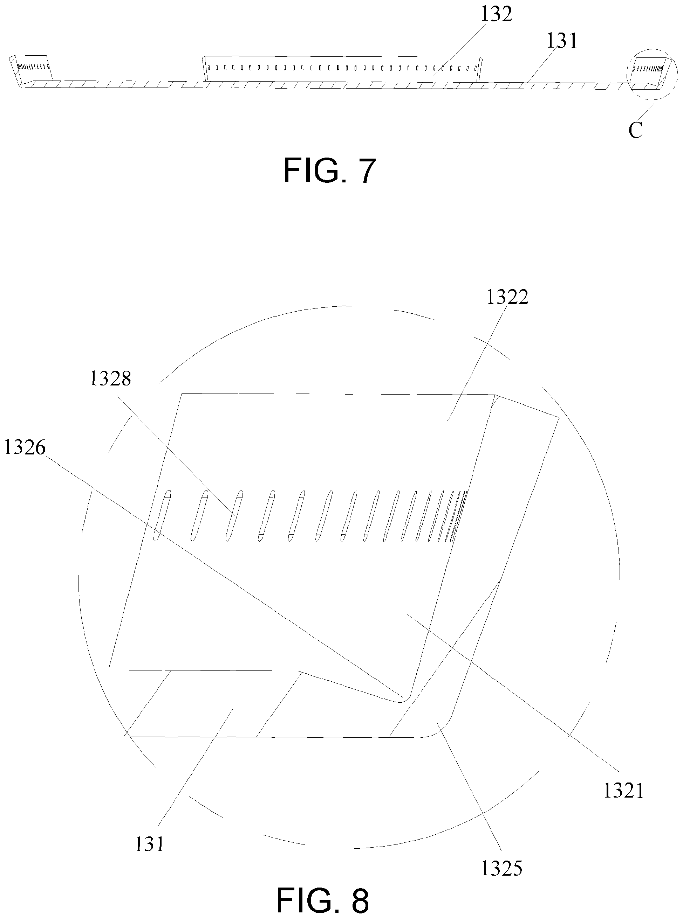

Please refer to FIG. 4 to FIG. 8. FIG. 4 is a schematic structural view of the connecting piece after bending in an embodiment of the cylindrical battery of the present disclosure. FIG. 5 is an enlarged partial view of area B in FIG. 4. FIG. 6 is a schematic structural view of the connecting piece before bending in the embodiment of FIG. 4. FIG. 7 is a cross-sectional view of the current collecting member in the embodiment of FIG. 6. FIG. 8 is an enlarged partial view of area C in FIG. 7. In an example of the cylindrical battery 100 of the present disclosure, the first fragile structure 1324 includes a hollow area 1328 disposed on the first bending part 1323. The specific shape of the hollow area 1328 is not limited in the present disclosure, for example, the hollow area 1328 may be a hollow area 1328 formed by multiple circular through holes arranged along the extending direction of the first bending part 1323, or may be a hollow area 1328 formed by multiple rectangular through holes arranged along the extending direction of the first bending part 1323, or may be a hollow area 1328 formed by a single approximately strip-shaped through hole disposed along the extending direction of the first bending part 1323. Preferably, in this embodiment, the hollow area 1328 is a structure of multiple array-arranged strip holes disposed along the extending direction of the first bending part 1323. By setting up a hollow area 1328 on the first bending part 1323, a fragile bending part may also be formed on the first bending part 1323, reducing the bending strength of the first bending part 1323, enabling the connecting piece 132 to deform timely and quickly during the grooving process; and it can also serve the welding positioning function when the connecting piece 132 is welded to the sidewall 111 inside the housing 110.

It should be noted that the first fragile structure 1324 disposed on the first bending part 1323 may also simultaneously include a thinned area 1327 and a hollow area 1328, which may also achieve the effect of facilitating the bending of the first bending part 1323 during the grooving process as in the above embodiment.

In an example of the cylindrical battery 100 of the present disclosure, the first connecting part 1321 bends towards the center of the current collecting body 131 relative to the current collecting body 131, and forms a second bending part 1325 at one end of the first bending part 1323 near the current collecting body 131, as shown in FIG. 3. FIG. 3 is a schematic structural view of the position of the welded part after grooving in an embodiment of the cylindrical battery of the present disclosure. The setting of the second bending part 1325 may reduce the transmission of deformation stress to the current collecting body 131 when the connecting piece 132 undergoes bending deformation during the grooving process, reducing the stress deformation of the current collecting body 131, thereby effectively protecting the stability of the welding connection between the current collecting body 131 and the first tab 121.

Furthermore, please refer to FIG. 6 to FIG. 8. FIG. 6 is a schematic structural view of the connecting piece before bending in the embodiment of FIG. 4. FIG. 7 is a cross-sectional view of the current collecting member in the embodiment of FIG. 6. FIG. 8 is an enlarged partial view of area C in FIG. 7 In an example of the cylindrical battery 100 of the present disclosure, the second bending part 1325 extends along the circumferential direction of the sidewall 111, and a second fragile structure 1326 is disposed on the second bending part 1325. The second fragile structure 1326 may be a local structure disposed in the middle or at both ends of the second bending part 1325, or may be an integral structure surrounding the entire second bending part 1325. The specific structural form of the second fragile structure 1326 may have multiple variations, for example, it may be a through-hole structure opened on the second bending part 1325, or a thinned area structure molded on the second bending part 1325, as long as the second fragile structure 1326 is able to reduce the bending strength of the second bending part 1325 and facilitate the bending and molding of the second bending part 1325. By setting the second fragile structure 1326 on the second bending part 1325, it is possible to facilitate the bending of the first connecting part 1321 at one end near the current collecting body 131, thereby avoiding the transmission of bending stress generated by the first connecting part 1321 to the current collecting body 131, preventing tearing of the welding connection between the current collecting body 131 and the first tab 121, and improving the stability of the electrical connection between the current collecting body 131 and the electrode assembly 120.

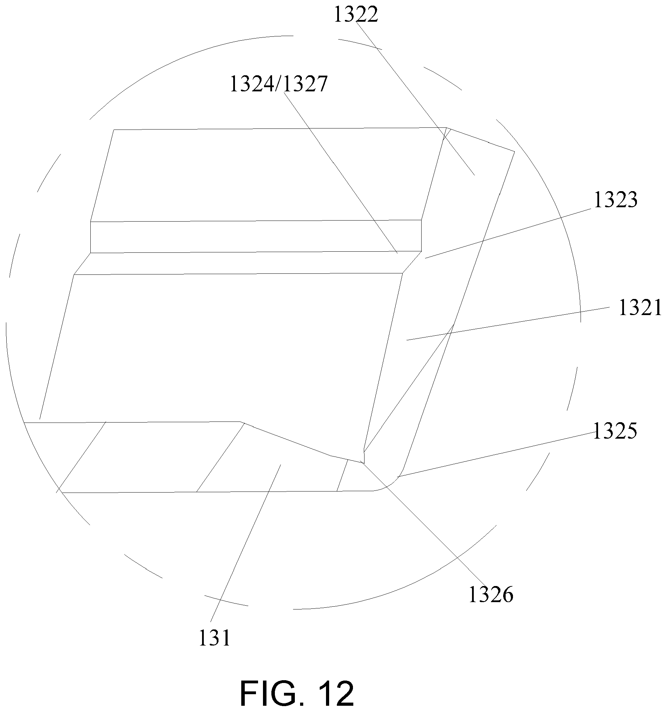

Furthermore, please refer to FIG. 12. FIG. 12 is a schematic view of another embodiment of the cylindrical battery of the present disclosure, where both the first bending part and the second bending part are provided with fragile structures. In this example, a first fragile structure 1324 is disposed on the first bending part 1323, and a second fragile structure 1326 is disposed on the second bending part 1325. With this arrangement, the first fragile structure 1324 may guide the bending of the first bending part 1323, and the second fragile structure 1326 may also guide the bending of the second bending part 1325. Therefore, it is possible to precisely control the bending path of the connecting piece 132 during the grooving process, improve the controllability of the bending deformation of the connecting piece 132 during the grooving process, and consequently contribute to improving the assembly yield of the cylindrical battery 100.

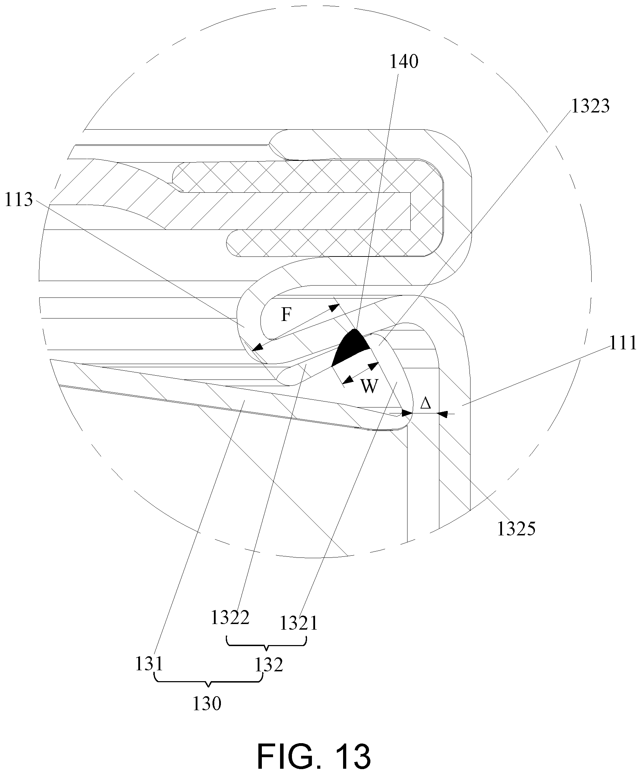

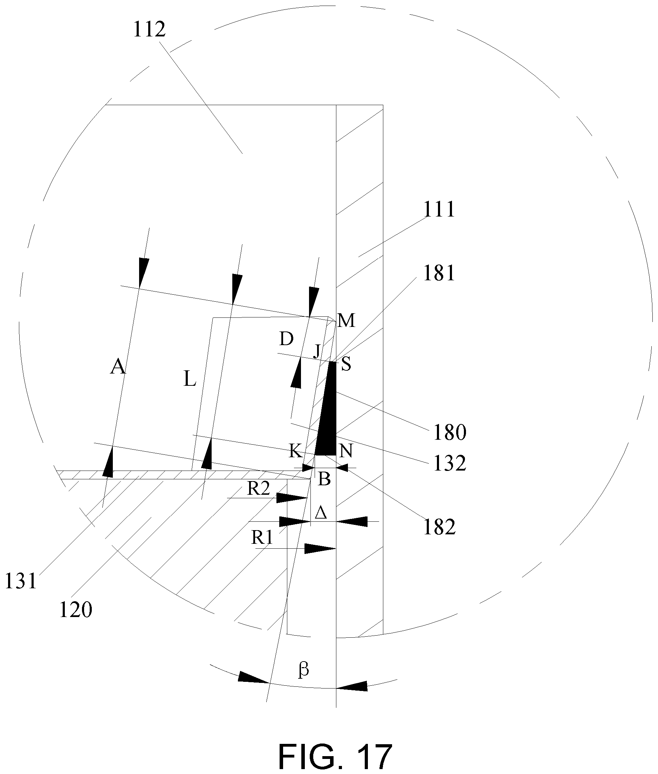

Please refer to FIG. 13 and FIG. 17. FIG. 13 is an enlarged partial view of the welded part after grooving in an embodiment of the cylindrical battery of the present disclosure. FIG. 17 is a partial schematic view of the overlapped position between the connecting piece and the sidewall before grooving in an embodiment of the cylindrical battery of the present disclosure. In an example of the cylindrical battery 100 of the present disclosure, the unfolded length dimension from one end of the connecting piece 132 connected to the current collecting body 131 to the free end of the connecting piece 132 is A, that is, the dimension from one end of the connecting piece 132 connected to the current collecting body 131 to the terminal end thereof before the connecting piece 132 is bent, as shown by the dimension A marked in FIG. 17. This dimension may be obtained by measuring the product external dimension of the current collecting member 130 before grooving (when in reverse, the measurement method is: the sum of the unfolded dimensions or the external contour lengths). The minimum distance between the second bending part 1325 and the inner wall of the sidewall 111 is Δ along the radial direction of the housing 110, as shown in FIG. 13 and FIG. 17. The dimension of the minimum distance Δ may be obtained by directly measuring the dimension of gap between the second bending part 1325 and the inner wall of the sidewall 111, or may be obtained by subtracting the outer diameter R2 of the current collecting member 130 from the inner diameter R1 of the sidewall 111, where dimensions R1 and R2 are marked as shown in FIG. 17. The extension length of the second connecting part 1322 is F, as shown in FIG. 13. The width dimension of the welded part 140 on the second connecting part 1322 is W along the extending direction of the second connecting part 1322, and the dimension W may be obtained by measurement, and 0.2mm+W≤F≤0.05mm*A/Δ.

In conjunction with FIG. 17, FIG. 17 is a partial schematic view of the overlapped position between the connecting piece and the sidewall before grooving in an embodiment of the cylindrical battery of the present disclosure. To facilitate the insertion of the current collecting member 130 into the housing and meet the requirements of welding position between the connecting piece 132 and the sidewall 111, in this example, after the current collecting member 130 is inserted into the housing 110, the connecting piece 132 on the current collecting member 130 is disposed in an inclined overlapping arrangement with the sidewall 111, with the inclined angle disposed as β. The height dimension A of the connecting piece 132 is generally any value within the range of 2mm to 4mm, and values within this dimension range may meet the requirements of welding position between the connecting piece 132 and the sidewall 111 in regular cylindrical batteries 100. Referring to FIG. 17, an approximately triangular gap distribution is formed between the connecting piece 132 and the sidewall 111 along the height direction of the sidewall 111, with the gap value being smallest near one side of the opening 112 and the largest near one side of the electrode assembly 120. In the actual process of welding the connecting piece 132 and the sidewall 111, the inventors found that when the gap between the connecting piece 132 and the sidewall 111 is too large (i.e., when the welding position between the connecting piece 132 and the sidewall 111 is too close to the electrode assembly 120), the welded part 140 formed between the connecting piece 132 and the sidewall 111 is prone to welding spatter, leading to poor welding quality and affecting the requirements of current guiding between the connecting piece 132 and the sidewall 111. Therefore, in the actual welding process, it is necessary to explore the maximum gap value that meets the requirements of welding quality between the connecting piece 132 and the sidewall 111 in order to obtain better welding quality between the connecting piece 132 and the sidewall 111. The maximum gap value that meets the requirements of welding quality between the connecting piece 132 and the sidewall 111 is set as the safety gap, as shown by dimension B in FIG. 17. The connecting piece and the sidewall contact each other to form an intersection point M, and the triangular area enclosed by the connection of points K, N, and M is defined as the to-be-welded area 180, with line segment KN being the lower edge 182 of the to-be-welded area 180. When the length of line segment KN is equal to dimension B, the welded part within the to-be-welded area 180 has better welding quality, and thus a better welding connection strength may be achieved between the connecting piece and the sidewall.

To determine the numerical value of the safety gap B, in the present disclosure, the inventors employed some experimental means and conducted multiple tests to derive the optimal dimension of the safety gap B as 0.05mm. The specific experimental method and steps are as follows.
(1) Multiple sets of assemblies of current collecting members 130 and housing 110 were prepared.
   Five identical current collecting members 130 and five identical housings 110 were selected. The five current collecting members 130 were loaded into the five housings 110 respectively according to the assembly relationship, and the five current collecting members 130 were marked as 1#, 2#, 3#, 4#, and 5# respectively.
(2) Different welding gaps were formed between the connecting pieces 132 of the five current collecting members 130 and their corresponding housings 110.
   The connecting piece 132 of the 1# current collecting member 130 directly abutted and contacted the sidewall 111 of the housing 110, i.e., the welding gap between the connecting piece 132 and the sidewall 111 was zero. For the 2# current collecting member 130, a piece of adhesive tape with a thickness of 0.025mm was attached to one side of the connecting piece 132 facing the sidewall 111 of the housing 110, and then the connecting piece 132 was pressed tightly against the sidewall 111 of the housing 110, thereby forming a welding gap of 0.025mm between the connecting piece 132 and the sidewall 111. For the 3# current collecting member 130, two pieces of adhesive tape with a thickness of 0.025mm were attached to one side of the connecting piece 132 facing the sidewall 111 of the housing 110, and then the connecting piece 132 was pressed tightly against the sidewall 111 of the housing 110, thereby forming a welding gap of 0.05mm between the connecting piece 132 and the sidewall 111. For the 4# current collecting member 130, three pieces of adhesive tape with a thickness of 0.025mm were attached to one side of the connecting piece 132 facing the sidewall 111 of the housing 110, and then the connecting piece 132 was pressed tightly against the sidewall 111 of the housing 110, thereby forming a welding gap of 0.075mm between the connecting piece 132 and the sidewall 111. For the 5# current collecting member 130, four pieces of adhesive tape with a thickness of 0.025mm were attached to one side of the connecting piece 132 facing the sidewall 111 of the housing 110, and then the connecting piece 132 was pressed tightly against the sidewall 111 of the housing 110, thereby forming a welding gap of 0.1mm between the connecting piece 132 and the sidewall 111.
(3) The above five sets of assemblies of current collecting member 130 and housing 110 were welded to form corresponding welded parts 140 between the connecting piece 132 and the sidewall 111 of the housing 110. The welded parts 140 formed between the five sets of current collecting members 130 and their corresponding housings 110 were marked as welded part a, welded part b, welded part c, welded part d, and welded part e, respectively.
(4) Pull-apart tests were performed on welded parts a to e respectively.

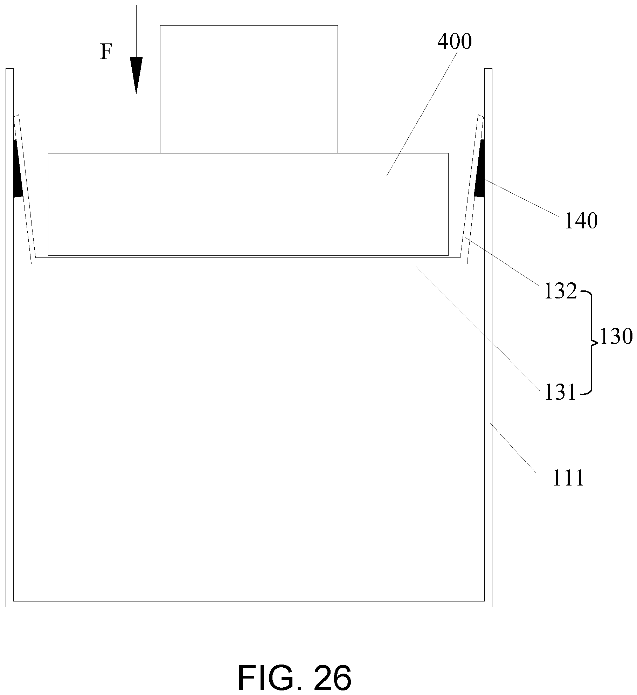

The pull-apart tests for welded parts a to e adopted the shear tensile testing method. First, a cylindrical sample fixture 400 was prepared. One end of the cylindrical sample fixture 400 in the axial direction was connected to the working end of a universal tensile testing machine. The assembly of the 1# current collecting member 130 and the housing 110 was disposed directly below the cylindrical sample fixture. The universal tensile testing machine was operated to move the cylindrical sample fixture 400 downward along the axial direction, and to be abutted and pressed tightly against the current collecting body 131 of the 1# current collecting member 130. The pressure was gradually increased and applied by the cylindrical sample fixture 400 on the current collecting body 131, thereby continuously increasing the pulling force experienced at the welded part a, until the connecting piece 132 was pulled apart at the welded part a. The tensile force value of the universal tensile testing machine at this time was recorded and the pull-apart effect at the welded part a was recorded as well, thus completing the pull-apart test for welded part a, as shown in FIG. 26. FIG. 26 is a schematic view of the pull-apart test performed on the welded part formed between the connecting piece and the sidewall.

The above steps were repeated to complete the pull-apart tests for welded parts b to e respectively, and the corresponding test tensile force values and pull-apart effects were recorded respectively, as shown in Table 1.

**Table 1 Test tensile forces and pull-apart results corresponding to welded parts formed with different welding gaps**

| **Serial Number of Welded Parts** | **Welding gaps (mm)** | **Test tensile force F/N** | **Pull-apart tests** |
|---|---|---|---|
| Welded part a | 0 | 615 | A part of the connecting piece located outside the welded part a fell off from the housing, while a part of the connecting piece located in the welded part a was completely retained on the surface of the housing. |
| Welded part b | 0.025 | 501 | As shown in FIG. 23, a part of the connecting piece located outside the welded part b was basically detached from the housing, while a part of the connecting piece within the welded area b was basically completely retained on the surface of the housing. |
| Welded part c | 0.05 | 437 | As shown in FIG. 24, a part of the connecting piece outside the welded part c fell off from the housing, while a small amount of the connecting piece within the welded part c remained on the surface of the housing. |
| Welded part d | 0.075 | 189 | As shown in FIG. 25, the connecting piece completely fell off from the surface of the housing, with no residue of the connecting piece remaining on the surface of the housing. |
| Welded part e | 0.1 | 150 | Consistent with the results shown in FIG. 25, the connecting piece completely detached from the surface of the housing, with no residual connecting piece remaining on the surface of the housing. |

As shown in Table 1, it may be learned that when the welding gap between the connecting piece 132 and the sidewall 111 is less than or equal to 0.05mm, it is possible to ensure a good connection strength between the connecting piece 132 and the sidewall 111. This may guarantee that the connecting piece 132 is not easily detached from the sidewall 111 when the groove is formed on the housing 110.

In the meantime, from the magnitude of the test tensile force values shown in Table 1, it may be learned that the test tensile force value is positively correlated with the welding gap between the connecting piece 132 and the sidewall 111 when the connecting piece 132 is pulled apart from the housing 110. That is, the smaller the welding gap, the larger the test tensile force value, indicating a higher connection strength of the welded part 140 formed between the connecting piece 132 and the housing 110. Moreover, when the welding gap between the connecting piece 132 and the sidewall 111 is less than or equal to 0.05mm, the change trend of the test tensile force value is relatively stable. However, when the welding gap between the connecting piece 132 and the sidewall 111 is greater than 0.05mm, the test tensile force value decreases rapidly. From this, it may be inferred that when the welding gap between the connecting piece 132 and the sidewall 111 is greater than 0.05mm, the connection strength of the welded part 140 formed between the connecting piece 132 and the housing 110 will significantly decrease, thereby making the connecting piece 132 easily detach from the sidewall 111 when the groove is formed on the housing 110.

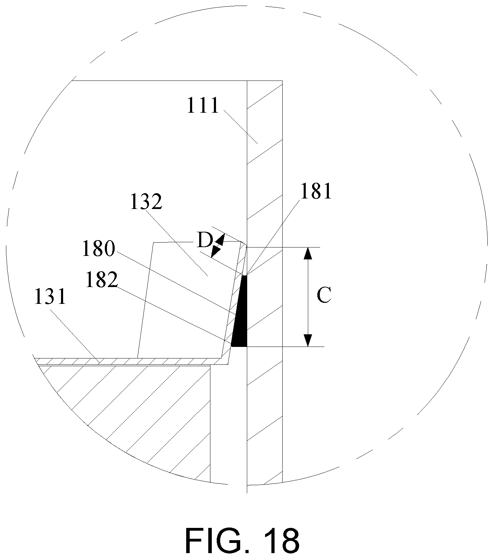

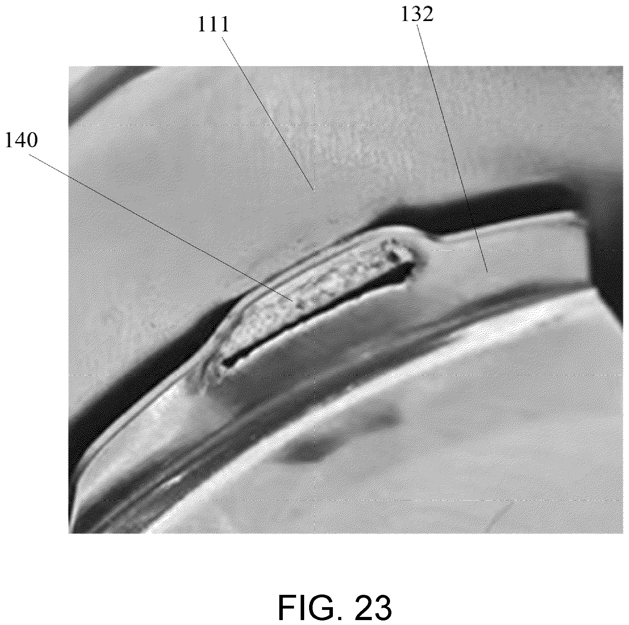

By referring to the experimental results in Table 1 and the pull-apart effect diagrams of the welded part shown in FIG. 23 to FIG. 25, it may be learned that in this example, setting the welding gap between the connecting piece 132 and the sidewall 111, i.e., the safety gap B, to 0.05mm is relatively reasonable. Combining FIG. 17 and FIG. 18, FIG. 17 is a partial schematic view of the overlapped position between the connecting piece and the sidewall before grooving in an embodiment of the cylindrical battery of the present disclosure; FIG. 18 is a schematic view of the distribution position of the to-be-welded area between the connecting piece and the sidewall before grooving in an embodiment of the cylindrical battery of the present disclosure. The distance between the lower edge 182 and the intersection point M is set to be dimension C, then C=B/tanβ. The distance between point K and point M is set as L along the extending direction of the connecting piece 132. From the formulas sinβ=B/L and sinβ=Δ/A, it may be derived that: L= B *A/Δ. B=0.05mm is input into the formula, it may be obtained that Lmax= 0.05*A/Δ. That is, when the to-be-welded area 180 is welded, if the position where the welded part 140 is formed on the connecting piece 132 falls within the area between points K and M, the welding quality between the connecting piece 132 and the sidewall 111 is better, without welding spatter and other issues, thereby ensuring a stable current guiding area between the connecting piece 132 and the housing 110. Combining FIG. 13, FIG. 13 is an enlarged partial view of the welded part after grooving in an embodiment of the cylindrical battery of the present disclosure, it may be known that after the connecting piece 132 is bent, the extension length dimension F of the second connecting part 1322 is approximately equal to dimension L in FIG. 17. That is, Fmax= Lmax =0.05 *A/Δ. In the meantime, since the welding at the overlapping position between the edge of the connecting piece 132 diverging from one side of the current collecting member 130 and the inner wall of the sidewall 111 is butt welding, the molten pool formed at this position is shallow, without enough metal liquid to fill the molten pool. Accordingly, it is possible to cause lower strength of the welded part 140, easily causing the connecting piece 132 to detach from the surface of the sidewall 111 during the grooving process, and also likely to result in weld mark biting, leading to poor appearance of the welded product. In view of this, in this example, as shown in FIG. 17, the entire to-be-welded area 180 is disposed below the intersection point M along the height direction of the sidewall 111, and one side of the to-be-welded area 180 near the opening 112 includes an upper edge 181, as shown by line segment JS in FIG. 17. One end of the upper edge 181 intersects with the inner wall of the sidewall 111 to form the intersection point S, and the other end of the upper edge 181 intersects with the connecting piece 132 to form the intersection point J. After numerous experimental studies, the inventor found that when the length D of line segment MJ is greater than or equal to 0.2mm, the welding strength between the connecting piece 132 and the sidewall 111 is improved, and weld mark biting as well as poor welding appearance quality issues are less likely to occur. Referring again to FIG. 13, FIG. 13 is an enlarged partial view of the welded part after grooving in an embodiment of the cylindrical battery of the present disclosure, it may be known that the minimum dimension Fₘᵢₙ of dimension F is 0.2mm+W. From this, it may be inferred that when 0.2mm+W≤F≤0.05mm*A/Δ, it may be determined that the welding connection strength between the connecting piece 132 and the sidewall 111 is improved.

Through the above conversion relationship between dimensions L and F, we may transform the limit position parameters of the welded part 140 on the connecting piece 132 before groove deformation into the limit length dimension of the second connecting part 1322 after grooving for expression. This setting allows us to only measure dimension F on the finished cylindrical battery 100 and determine whether the measured value of dimension F satisfies the relationship 0.2mm+W≤F≤0.05mm*A/Δ, to infer the setting position of the welded part 140 on the connecting piece 132 before grooving. In this way, it is possible to further determine whether the welding quality of the welded part 140 is good, without the need for cumbersome experimental methods such as pull-and-break tests on the welded part 140 to verify the welding quality of the welded part 140. Therefore, this is more conducive to accelerating the development process of new products and reducing the verification steps for new products.

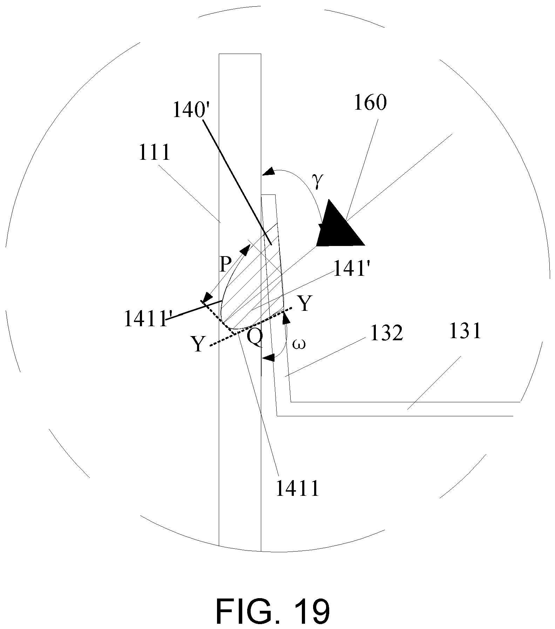

Please refer to FIG. 13, FIG. 13 is an enlarged partial view of the welded part after grooving in an embodiment of the cylindrical battery of the present disclosure. In an example of the cylindrical battery 100 of the present disclosure, the length of the second connecting part 1322 is F, and the width dimension of the welded part 140 is W along the extending direction of the second connecting part 1322, and 0.2mm+W≤F≤0.05mm/sin4. From the derivation formula sinβ=B/L in the above embodiment, we may deduce that by inputting dimension B=0.05mm into the formula, the calculated dimension is Lmax=0.05/sinβ. Referring to FIG. 17, FIG. 17 is a partial schematic view of the overlapped position between the connecting piece and the sidewall before grooving in an embodiment of the cylindrical battery of the present disclosure. From FIG. 17, it may be known that the larger the inclined angle β between the connecting piece 132 and the sidewall 111, the larger the dimension Δ, and thus the less likely it is for scratches or jamming to occur between the current collecting member 130 and the sidewall 111 during the process of inserting the current collecting member 130 into the housing. However, the smaller the abutting force between the connecting piece 132 and the sidewall 111, the worse the radial positioning accuracy between the current collecting member 130 and the sidewall 111. Conversely, the smaller the dimension Δ, the more likely it is for scratches or jamming to occur between the current collecting member 130 and the sidewall 111 during the process of inserting the current collecting member 130 into the housing. However, the greater the abutting force between the connecting piece 132 and the sidewall 111, the better the radial positioning accuracy between the current collecting member 130 and the sidewall 111. In view of this, in the actual production process, after multiple experiments, the inventors concluded that when the inclined angle β is set between 1° and 4°, the setting may facilitate the process of inserting the current collecting member 130 into the housing and ensure optimal radial positioning accuracy between the current collecting member 130 and the sidewall 111. Due to errors that might exist in the manufacturing or assembly process of the inclined angle β, the actual inclined angle β in the product may be any value between 1° and 4°, such as 1°, 2°, or 3°. In actual design, the relatively certain dimensions are the upper limit of 1° and the lower limit of 4° for the inclined angle β. Therefore, in this embodiment, the maximum value of L is set to 0.05/sin4. This setting ensures that all values of the inclined angle β between 1° and 4° are able to meet the welding requirements. In this embodiment, the relationship between F and L is established through the inclined angle β, so that only by measuring dimension F on the finished cylindrical battery 100 and determining whether F satisfies the relationship 0.2mm+W≤F≤0.05mm/sin4, it is possible to infer whether the forming position of the welded part 140 before grooving is reasonable, and further infer whether the welding quality between the connecting piece 132 and the sidewall 111 is good. This eliminates the need for cumbersome experimental methods such as pull-and-break tests on the welded part 140 to verify the welding quality, which is more conducive to accelerating the development process of new products and reducing the verification steps for new products. At the same time, in this verification process, only one intermediate parameter, i.e., the width dimension W of the welded part 140, is needed, and dimension W may be directly measured. Therefore, the upper and lower limit values of dimension F may be easily calculated through this formula, making the verification method relatively simple and easy to implement and promote. Please refer to FIG. 18, FIG. 18 is a schematic view of the distribution position of the to-be-welded area between the connecting piece and the sidewall before grooving in an embodiment of the cylindrical battery of the present disclosure. The inventors found in actual production that, due to the small thickness of both the connecting piece 132 and the sidewall 111, the welding process window between the sidewall 111 and the connecting piece 132 is small during welding, making it difficult to control the welding quality. To address this issue, the inventors proposed an inclined welding scheme as shown in FIG. 19, FIG. 19 is a schematic view of the welded position between the welding head and the sidewall before grooving in an embodiment of the cylindrical battery of the present disclosure. That is, the welding head 160 performs the welding operation in a tilted posture to the sidewall. This may form a welded part 140' as shown in FIG. 18 during the welding process, where the welded part 140' has an inclined molten pool 141'. The contour line 1411' of the molten pool 141' intersects with the inner wall of the sidewall 111 to form an intersection point Q, and the tangent line (as shown by line Y-Y in FIG. 19) of the contour line 1411' passing through the intersection point Q forms an obtuse angle ω with the inner wall of the sidewall 111, and the angle ω is an obtuse angle.

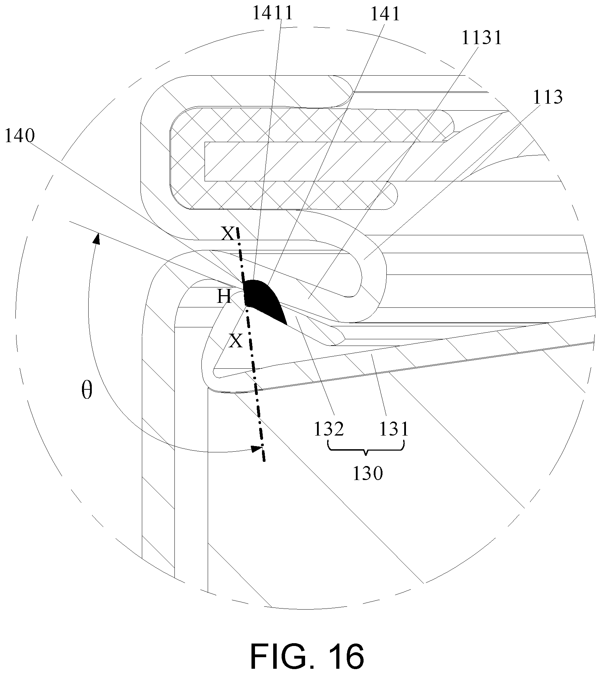

In an example of the cylindrical battery 100 of the present disclosure, please refer to FIG. 16, FIG. 16 is a schematic view of the position between the molten pool and the sidewall and connecting piece in an embodiment of the cylindrical battery of the present disclosure. The welded part 140 includes a molten pool 141, which corresponds to the molten pool 141' in FIG. 19. The molten pool 141 is formed with a contour line 1411 on the axial cross-section of the cylindrical battery 100 passing through the molten pool 141, wherein the contour line 1411 corresponds to the contour line 1411' in FIG. 19. The contour line 1411 of the molten pool 141 includes an approximately straight-line contour formed on one side of the second connecting part 1322 facing the electrode assembly 120 and an approximately curved contour formed on one side of the second connecting part 1322 divergent from the electrode assembly 120. The opening direction of the curved contour faces one side of the electrode assembly 120, and the two ends of the straight-line contour are connected to the two ends of the curved contour respectively. At least a part of the curved contour extends into the interior of the first groove wall 1131. One side of the curved contour away from the axis of the housing 110 intersects with one side surface of the first groove wall 1131 facing the second connecting part 1322 to form a first intersection point H along the radial direction of the housing 110, wherein the first intersection point H corresponds to the intersection point Q in FIG. 19. The tangent line (as shown by line X-X in FIG. 16) of the curved contour passing through the first intersection point H forms an obtuse angle θ with the first groove wall 1131 in the axial direction divergent from the housing 110. The obtuse angle θ corresponds to the angle ω in FIG. 19. By setting the obtuse angle θ, on one hand, the stress concentration generated on one side of the molten pool 141 near the first bending part 1323 during the grooving process is smaller, which may improve the connection strength of the welded part 140 and reduce the probability of the connecting piece 132 falling off from the sidewall 111 due to the failure of the welded part 140.

Please refer to FIG. 2. In an example of the cylindrical battery of the present disclosure, the central area of the current collecting body 131 at least partially protrudes towards one side of the opening 112 of the housing 110 along the axial direction of the housing 110, and is higher than the peripheral area of the current collecting body 131 covered by the groove 113. There is no limitation to the protruding structure, for example, the protruding structure may be an arc-shaped protruding structure, or a truncated cone-shaped protruding structure, or a combination structure of several different shapes, as long as it can be ensured that at least a part of the central area of the current collecting body 131 is higher than the peripheral area of the current collecting body 131 covered by the groove 113. This arrangement makes the central area of the current collecting body 131 closer to one side of the cap 150, relatively increasing the accommodation space for the electrode assembly 120 below the current collecting body 131. Therefore, under the condition of a fixed height of the housing 110, the volumetric energy density of the cylindrical battery 100 may be relatively improved.

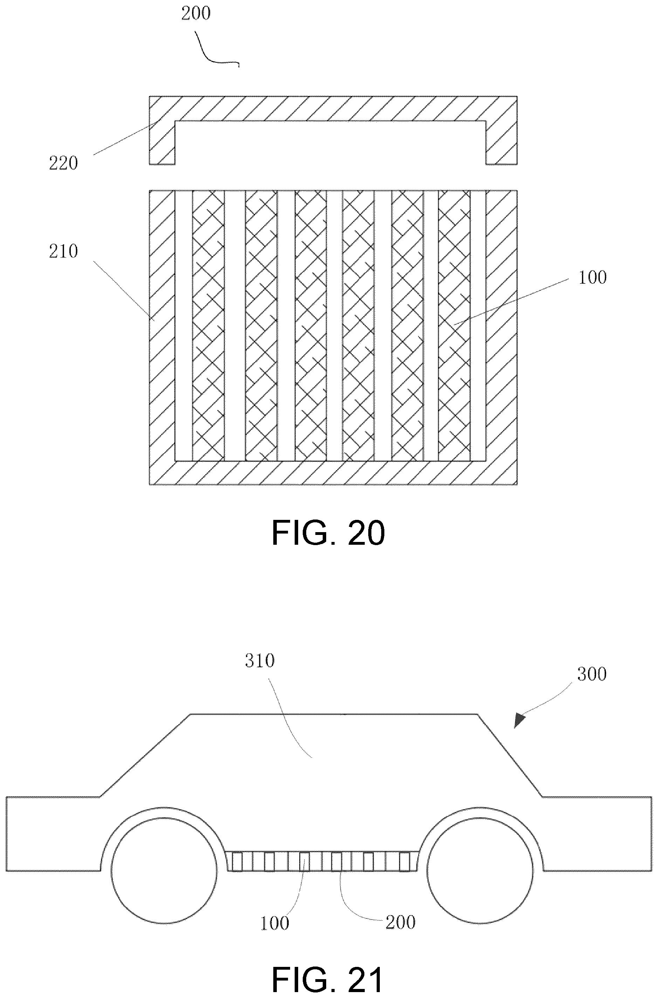

Please refer to FIG. 20 and FIG. 21. The present disclosure further provides an electronic device 300, which includes a battery assembly 200 and an operating part 310. The operating part 310 is electrically connected to the battery assembly 200 to obtain power support. As an example, the electronic device 300 may be a vehicle. The vehicle may be a gasoline vehicle, a gas vehicle, or a new energy vehicle. The new energy vehicle may be a pure electric vehicle, a hybrid vehicle, or a range-extended vehicle, but is not limited thereto. The operating part 310 may be the vehicle body, with the battery assembly 200 disposed at the bottom of the vehicle body, providing power support for the vehicle's operation or the operation of electrical members inside the vehicle. However, in some other embodiments, the electronic device 300 may also be a mobile phone, a portable device, a laptop computer, a ship, a spacecraft, an electric toy, and an electric tool, etc. Spacecraft includes airplanes, rockets, space shuttles, and spaceships, etc.; the operating part 310 may be a unit member that can obtain power from the battery assembly 200 and perform corresponding work, such as the fan blade rotation unit of a fan, the dust suction work unit of a vacuum cleaner, etc. Electric toys include stationary or mobile electric toys, for example, game consoles, electric car toys, electric ship toys, and electric airplane toys, etc.; electric tools include metal cutting electric tools, grinding electric tools, assembly electric tools, and railway electric tools, for example, electric drills, electric grinders, electric wrenches, electric screwdrivers, electric hammers, impact drills, concrete vibrators, and electric planers, etc. The embodiment of the present disclosure does not impose special limitations on the aforementioned electronic device 300.

Please refer to FIG. 20. The aforementioned battery assembly 200 includes the cylindrical battery 100 in any of the above embodiments. In an embodiment of the battery assembly 200 of the present disclosure, the battery assembly 200 includes a box 210, a lid 220, and multiple cylindrical batteries 100. The multiple cylindrical batteries 100 are placed in the box 210, connected in series or parallel, or a combination of series and parallel connections. The lid 220 covers the box 210 to protect the multiple cylindrical batteries 100. It should be noted that in addition to the cylindrical battery 100 of the present disclosure, the battery assembly 200 may also include parts such as a thermal management system, circuit boards, and so on for the battery assembly 200. The battery assembly 200 may be a battery module, a battery pack, or an energy storage cabinet, etc.; no further details will not be elaborated here.

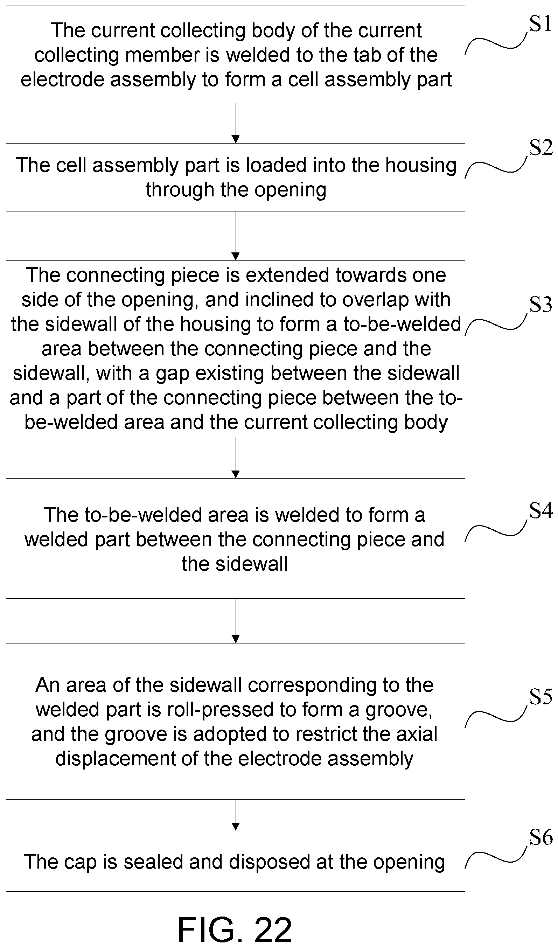

Please refer to FIG. 22. The present disclosure also provides a manufacturing method of a cylindrical battery 100, which is configured for the molding and production of the cylindrical battery 100 in the aforementioned embodiments. The cylindrical battery 100 includes a housing 110, an electrode assembly 120, a current collecting member 130, and a cap 150. The housing 110 includes a surrounding sidewall 111, and one end of the sidewall 111 is formed with an opening 112. The current collecting member 130 includes a current collecting body 131 and a connecting piece 132 fixedly connected to the periphery of the current collecting body 131. The manufacturing method includes the following steps.

In step S1, the current collecting body 131 of the current collecting member 130 is welded to the first tab 121 of the electrode assembly 120 to form a cell assembly part.

The specific position and area size of the welding connection between the current collecting body 131 and the first tab 121 are not limited in the present disclosure, as long as they meet the requirements of current guiding between the current collecting member 130 and the first tab 121. The specific execution process of this step may refer to the welding process between the current collecting member 130 and the electrode assembly 120 in the existing technology, which will not be elaborated here.

In step S2, the cell assembly part is loaded into the housing 110 through the opening 112.

As long as it is ensured that the cell assembly part can be loaded into the housing 110 through the opening 112, the specific configuration method of the cell assembly part is not limited in the present disclosure. For example, the configuration may be carried out manually or by a robotic arm, etc.

In step S3, the connecting piece 132 is extended towards one side of the opening 112, and inclined to overlap with the sidewall 111 of the housing 110 to form a to-be-welded area 180 between the connecting piece 132 and the sidewall 111, with a gap existing between the sidewall 111 and a part of the connecting piece 132 between the to-be-welded area 180 and the current collecting body 131.

The connecting piece 132 is located on one side of the current collecting body 131 divergent from the electrode assembly 120, and the connecting piece 132 extends in an inclined manner towards one side of the opening 112 from one end connected to the current collecting body 131, forming an inclined overlap between the connecting piece 132 and the sidewall 111 to create the to-be-welded area 180. The gap between one end of the connecting piece 132 near the current collecting body 131 and the sidewall 111 is the largest along the height direction of the housing 110, while the gap between one end of the connecting piece 132 away from the current collecting body 131 and the sidewall 111 is the smallest, nearly zero. The specific location of the to-be-welded area 180 is not limited in the present disclosure; any area that meets the requirements of welding distance between the connecting piece 132 and the sidewall 111 may serve as the to-be-welded area 180. This arrangement ensures that there is a gap between a part of the connecting piece 132 between the to-be-welded area 180 and the current collecting body 131 and the sidewall 111, thus there is no contact with the sidewall 111.

In step S4, the to-be-welded area 180 is welded to form a welded part 140 between the connecting piece 132 and the sidewall 111.

When the to-be-welded area 180 is welded, the welding may be performed on the inner side of the housing 110, or on the outer side of the housing 110, as long as the welding forms a welded part 140 between the connecting piece 132 and the sidewall 111 that meets the strength requirements.

In step S5, an area of the sidewall 111 corresponding to the welded part 140 is roll-pressed to form a groove 113, and the groove 113 is adopted to restrict the axial displacement of the electrode assembly 120.

The forming method of the groove 113 is not limited in the present disclosure. For example, the groove 113 may be formed by processing the sidewall 111 with a grooving tool, or by stamping the sidewall 111 with a forming mold, etc. The cross-sectional shape of the groove 113 may be rectangular, square, trapezoidal, or any shape that meets the usage requirements. The present disclosure does not impose specific limitations in this regard.

In step S6, the cap 150 is sealed and disposed at the opening 112.

Please refer to FIG. 1, the outer periphery of the cap 150 is overlapped with the surface at one side of the groove 113 facing the opening 112 through the sealing ring 170, then, the opening 112 of the sidewall 111 is crimped to seal and dispose the cap 150 at the opening 112 of the housing 110.

In the above manufacturing steps of the cylindrical battery 100, since the connecting piece 132 is inclined and overlapped with the sidewall 111 before the grooving step, this may allow a gap to be formed between a part of the connecting piece 132 between the current collecting body 131 and the overlapping position and the sidewall 111. This gap gradually increases from one side of the opening 112 towards one side of the electrode assembly 120 along the height direction of the housing 110. The existence of this gap, on one hand, may facilitate the insertion of the current collecting member 130 into the housing, improving the assembly efficiency and accuracy of the cylindrical battery 100. On the other hand, when grooving the opening 112 of the housing 110, a part of the connecting piece 132 between the welded part 140 and the current collecting body 131 will not be subjected to the compressive force from the corresponding position of the sidewall 111, thereby reducing the probability of displacement of the connecting piece 132 at the welded part 140 relative to the groove 113. This effectively improves the stability of the welding connection between the connecting piece 132 and the groove 113, enhancing the assembly yield of the cylindrical battery 100.

In an example of the manufacturing method of the present disclosure, please refer to FIG. 17. FIG. 17 is a partial schematic view of the overlapped position between the connecting piece and the sidewall before grooving in an embodiment of the cylindrical battery of the present disclosure. Before the to-be-welded area 180 is welded, the inclined angle between the connecting piece 132 and the housing 110 is set as β, and the angle range of β is 1° to 4°, for example, β may be values such as 1°, 2°, 3°, or 4°. Setting the inclined angle β within the range of 1° to 4° may ensure that the cell assembly part may be smoothly inserted into the housing, and also obtain a configuration gap between the connecting piece 132 and the sidewall 111 that meets the welding requirements, thereby satisfying the requirements of welding quality between the connecting piece 132 and the sidewall 111.

In an example of the manufacturing method of the present disclosure, before the to-be-welded area 180 is welded, the distance from the contact end of the connecting piece 132 with the sidewall 111 to the connection end of the connecting piece 132 with the current collecting body 131 is set to dimension A along the extending direction of the connecting piece 132, as shown in FIG. 17, and 2mm≤A≤4mm, for example, the dimension A may be 2mm, 3mm or 4mm. Given a fixed inclined angle β, the size of dimension A directly affects the welding position between the connecting piece 132 and the sidewall 111. The larger the dimension A, the closer the welded part 140 formed between the connecting piece 132 and the sidewall 111 is to one side of the opening 112, resulting in a smaller operable size range for grooving, which is not convenient for groove molding. Conversely, the closer the welded part 140 formed between the connecting piece 132 and the sidewall 111 is to one side of the electrode assembly 120, the more likely it is to interfere with the welding posture of the welding head 160, making it inconvenient for the welding head 160 to be welded, thus making it difficult to guarantee the welding quality. In this embodiment, by limiting the dimension A to the range of 2mm to 4mm, it is possible to simultaneously consider the molding efficiency of the groove 113 and the welding quality of the welded part 140.

Please refer to FIG. 17. FIG. 17 is a partial schematic view of the overlapped position between the connecting piece and the sidewall before grooving in an embodiment of the cylindrical battery of the present disclosure. From FIG. 17, it can be seen that when welding the overlapping position of the edge on one side of the connecting piece 132 diverging from the current collecting member 130 with the inner wall of the sidewall 111, the welding belongs to butt welding. Therefore, the molten pool formed at this position is shallow, and there is not enough metal liquid to fill the molten pool, which may lead to lower strength of the welded part 140. During the grooving process, it is likely to cause the connecting piece 132 to fall off from the surface of the sidewall 111, and it is also likely to cause weld mark biting, resulting in poor appearance of the welded product. In view of this, in an example of the manufacturing method of the present disclosure, please refer to FIG. 17. FIG. 17 is a partial schematic view of the overlapped position between the connecting piece and the sidewall before grooving in an embodiment of the cylindrical battery of the present disclosure. The to-be-welded area 180 is disposed below the intersection point M formed by the contact of the connecting piece 132 and the sidewall 111 along the height direction of the sidewall 111. The to-be-welded area 180 includes an upper edge 181 on one side near the opening 112. One end of the upper edge 181 intersects with the inner wall of the sidewall 111 to form an intersection point S, and the other end of the upper edge 181 intersects with the connecting piece 132 to form an intersection point J. The distance between the to-be-welded area 180 and the end wall of the connecting piece 132 is greater than or equal to 0.2mm along the extending direction of the connecting piece 132. As shown in FIG. 17, the length D of the line segment MJ is the distance between the to-be-welded area 180 and the end wall of the connecting piece 132, i.e., D≥0.2mm. This setting may allow the welded part 140 formed in the to-be-welded area 180 to avoid the position where the connecting piece 132 and the sidewall 111 contact each other, reducing problems such as weld mark biting or burst points due to the small gap between the connecting piece 132 and the sidewall 111. Such design not only ensures the welding strength of the welded part 140 but also improves the aesthetics of the appearance of the housing 110.

In an example of the manufacturing method of the present disclosure, please refer to FIG. 17. FIG. 17 is a partial schematic view of the overlapped position between the connecting piece and the sidewall before grooving in an embodiment of the cylindrical battery of the present disclosure. At the position corresponding to the lower edge 182 of the to-be-welded area 180 (as shown by the line segment KN in FIG. 17), the distance between the connecting piece 132 and the sidewall 111 is less than or equal to 0.05mm along the radial direction of the housing 110. From FIG. 17, it can be seen that due to the inclined overlap between the connecting piece and the sidewall, the gap between the connecting piece and the sidewall is the largest at the lower edge position of the to-be-welded area, as shown by dimension B in FIG. 17. Therefore, as long as it is ensured that the dimension B is less than or equal to 0.05mm, it can be certain that the distance between the connecting piece and the sidewall within the entire to-be-welded area is less than or equal to 0.05mm. When the dimension B is small, the welding quality of the welded part 140 is better; however, the welding process window is smaller, the welding efficiency is lower. Conversely, when the safety gap B dimension is large, the welding strength of the welded part 140 is worse; however, the welding process window is larger and the welding efficiency is higher. In this embodiment, through repeated experiments and verification, when the dimension B=0.05mm, a better welding connection strength between the connecting piece 132 and the sidewall 111 may be obtained, while also obtaining a better welding process window, ensuring welding efficiency.

In an example of the manufacturing method of the present disclosure, please refer to FIG. 17 and FIG. 18. FIG. 17 is a partial schematic view of the overlapped position between the connecting piece and the sidewall before grooving in an embodiment of the cylindrical battery of the present disclosure. FIG. 18 is a schematic view of the to-be-welded area between the connecting piece and the sidewall before grooving in an embodiment of the cylindrical battery of the present disclosure. The distance between the lower edge 182 of the to-be-welded area 180 and the contact point M between the connecting piece 132 and the sidewall 111 is C along the axial direction of the housing 110, and C=0.05/tanβ. From FIG. 17, it can be seen that the larger inclined angle β between the connecting piece and the sidewall, the larger the dimension Δ, and consequently, it is less likely to have scratches or jamming between the current collecting member and the sidewall during the process of inserting the current collecting member into the housing. However, the smaller the abutting force between the connecting piece and the sidewall, the worse the radial positioning accuracy between the current collecting member and the sidewall. Conversely, the smaller the dimension Δ, the more likely it is to have scratches or jamming between the current collecting member and the sidewall during the process of inserting the current collecting member into the housing; however, the abutting force between the connecting piece and the sidewall is greater, and the radial positioning accuracy between the current collecting member and the sidewall is better. Given this, in the actual production process, after multiple experiments, the inventors concluded that when the inclined angle β is set between 1° and 4°, it can both facilitate the insertion of the current collecting member into the housing and ensure a better radial positioning accuracy between the current collecting member and the sidewall. Due to errors that might exist in the manufacturing or assembly process, the actual inclined angle β in the product may be any value between 1° and 4°, such as 1°, 2°, or 3°. In actual design, the relatively certain dimensions are the upper limit of 1° and the lower limit of 4° for the inclined angle β. Therefore, in this embodiment, C is set to 0.05/sin4, which may ensure that all values of the inclined angle β between 1° and 4° can meet the welding requirements. By setting the dimension C, it is possible to facilitate the positioning of the welding head 160 relative to the sidewall 111 and the connecting piece 132 in the axial direction of the housing 110 during welding.

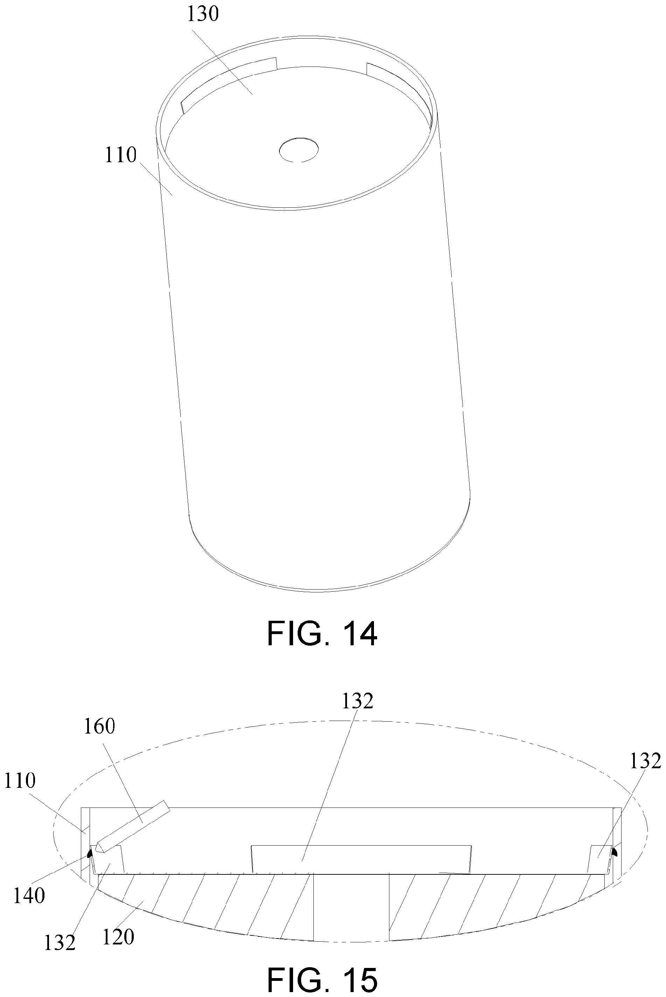

In an example of the manufacturing method of the present disclosure, please refer to FIG. 15 and FIG. 18. FIG. 15 is a schematic view of the welded position between the welding head and the connecting piece in an embodiment of the cylindrical battery of the present disclosure; FIG. FIG. 18 is a schematic view of the distribution position of the to-be-welded area between the connecting piece and the sidewall before grooving in an embodiment of the cylindrical battery of the present disclosure. When the to-be-welded area 180 is welded, a laser welding equipment is adopted for welding, and the laser welding equipment includes a welding head 160. The laser beam generated by the welding head 160 is directed from the interior of the housing 110 towards the to-be-welded area 180, and the laser beam performs the welding operation in a tilted posture to the sidewall 111. It should be noted that during the welding operation, the welding head 160 may be located on the outside of the housing or inside the housing, as long as it can be ensured that the laser beam generated by the welding head 160 is directed from the interior of the housing 110 towards the to-be-welded area 180. This arrangement allows the welded part 140 to form an inclined molten pool 141. On one hand, the inclined arrangement of the molten pool 141 results in less stress concentration on one side close to the first bending part 1323 during grooving, thereby improving the connection strength of the welded part 140 and reducing the probability of the connecting piece 132 falling off from the sidewall 111 due to the failure of the welded part 140. On the other hand, when the connecting piece 132 is welded to the sidewall 111, it can increase the effective depth of the molten pool 141, enlarge the welding process window of the welded part 140, and reduce the difficulty of controlling the welding quality between the connecting piece 132 and the sidewall 111.

Furthermore, in an example of the manufacturing method of the present disclosure, please refer to FIG. 19. FIG. 19 is a schematic view of the welded position between the welding head and the sidewall before grooving in an embodiment of the cylindrical battery of the present disclosure. The inclined angle γ between the laser beam generated by the welding head 160 and the sidewall 111 ranges from 15° to 80°, for example, γ may be 15°, 30°, 60° or 80°. By limiting the inclined angle γ to the range of 15° to 80°, it is possible to ensure that the welded part 140 has optimal welding strength, while also allowing the welding head 160 and the sidewall 111 to have an optimal welding posture, facilitating the welding head 160 to perform welding, and guaranteeing welding efficiency and quality.

In the cylindrical battery of the present disclosure, on one hand, since a part of the connecting piece between the welded part and the current collecting body does not contact the sidewall, when performing grooving at the opening position of the housing, a part of the connecting piece between the welded part and the current collecting body will not be subjected to the compressive force from the corresponding sidewall. This may reduce the probability of the connecting piece being displaced relative to the wall of the groove at the welded part, thereby effectively improving the stability of the welding connection between the connecting piece and the groove, and ultimately improving the stability of the electrical connection between the electrode assembly and the housing and increasing the yield rate of the cylindrical battery, thus ensuring the performance of the cylindrical battery. On the other hand, since one end part of the bent connecting piece away from the current collecting body contacts the groove and forms a welded part, while the part of the bent connecting piece between the welded part and the current collecting body does not contact the sidewall, thus forming a gap, it is possible to ensure that before grooving and when the current collecting member is inserted into the housing, and a gap is formed between the outer periphery of the connecting piece near one end of the electrode assembly end and the inner surface of the sidewall. In the meantime, one end of the connecting piece away from the electrode assembly is able to overlap with the sidewall, thus forming an inclined overlapping position relationship between the connecting piece and the sidewall. This not only facilitates the insertion of the current collecting member into the housing, but also forms a welded part with a larger cross-sectional area between the connecting piece and the sidewall, improving the welding strength between the connecting piece and the sidewall. Therefore, the present disclosure effectively overcomes some practical problems in the existing technology, thus having high utilization value and practical significance.

## Claims

1. A cylindrical battery (100), comprising:
a housing (110), comprising a sidewall (111), wherein one end of the sidewall (111) is formed with an opening (112), and a position near the opening (112) of the sidewall (111) comprises a groove (113) that is recessed towards an interior of the housing (110);
an electrode assembly (120), disposed inside the housing (110), wherein the groove (113) limits displacement of the electrode assembly (120) in an axial direction of the housing (120); and
a current collecting member (130), at least partially disposed between the electrode assembly (120) and the groove (130);
wherein the cylindrical battery (100) is **characterized in that** the current collecting member (130) comprises a current collecting body (131) and a connecting piece (132) connected to a periphery of the current collecting body (131), the current collecting body (131) is electrically connected to the electrode assembly (120), the connecting piece (132) is bent towards an axis of the housing (110) and welded to a surface of the groove (113) facing the electrode assembly (120) to form a welded part (140); a gap exists between a part of the connecting piece (132) between the welded part (140) and the periphery of the current collecting body (131) and the sidewall (111).

2. The cylindrical battery (100) according to claim 1, wherein a part of the connecting piece (120) between the welded part (140) and the periphery of the current collecting body (131) is not in contact with the sidewall (111).

3. The cylindrical battery (100) according to claim 2, wherein the current collecting member (130) comprises a plurality of connecting pieces (132), with the plurality of connecting pieces (132) arranged around the periphery of the current collecting body (131).

4. The cylindrical battery (100) according to claim 2, wherein the connecting piece (132) comprises a first connecting part (1321) and a second connecting part (1322) that are connected together, a part between the welded part (140) and the current collecting body (131) is the first connecting part (1321), the second connecting part (1322) extends towards the interior of the housing (110) from one end of the first connecting part (1321) near the welded part (140); wherein, the first connecting part (1321) is bent relative to the second connecting part (1322) to form a first bending part (1323).

5. The cylindrical battery (100) according to claim 4, wherein the first bending part (1323) extends along a circumferential direction of the sidewall (111), and a first fragile structure (1324) is disposed on the first bending part (1323).

6. The cylindrical battery (100) according to any one of claims 4-5, wherein the first connecting part (1321) is bent towards a center of the current collecting body (131) relative to the current collecting body (131) to form a second bending part (1325).

7. The cylindrical battery (100) according to claim 6, wherein a second fragile structure (1326) is disposed on the second bending part (1325).

8. The cylindrical battery (100) according to claim 6, wherein an unfolded length dimension from one end of the connecting piece (132) connected to the current collecting body (131) to a free end of the connecting piece (132) is A, a minimum distance between the second bending part (1325) and the sidewall (111) is Δ, a length of the second connecting part (1322) is F, a width dimension of the welded part (140) along an extending direction of the second connecting part (1322) is W, and 0.2mm+W≤F≤0.05mm*A/Δ.

9. The cylindrical battery (100) according to claim 6, wherein a length of the second connecting part (1322) is F, a width dimension of the welded part (140) along an extending direction of the second connecting part (1322) is W, and 0.2mm+W≤F≤0.05mm/sin4.

10. The cylindrical battery (100) according to claim 1, wherein the groove (113) comprises a first groove wall (1131) facing one side of the electrode assembly (120), the welded part (140) comprises a molten pool (141), a contour line (1411) of the molten pool (141) on one side away from the axis of the housing (110) intersects with the first groove wall (1131) to form a first intersection point (H) on an axial cross-section of the cylindrical battery (100) passing through the molten pool (141), an obtuse angle θ diverging from an axial direction of the housing (110) is formed between a tangent line of the contour line (1411) passing through the first intersection point (H) and the first groove wall (1131).

11. A manufacturing method of a cylindrical battery (100), the cylindrical battery (100) comprising a housing (110), an electrode assembly (120), a current collecting member (130) and a cap (160), wherein the housing (110) comprises a sidewall (111), and one end of the sidewall (111) is formed an opening (112), the current collecting member (130) comprises a current collecting body (131) and a connecting piece (132) fixedly connected to a periphery of the current collecting body (131), **characterized in that** the manufacturing method comprising the following steps:
welding and connecting the current collecting body (131) of the current collecting member (130) with a tab (121) of the electrode assembly (120) to form a cell assembly part;
loading the cell assembly part into the housing (110) through the opening (112);
making the connecting piece (132) extend towards an opening side, and to incline to overlap with the sidewall (111) of the housing (110) to form a to-be-welded area (180) between the connecting piece (132) and the sidewall (111), wherein a gap exists between the sidewall (111) and a part of the connecting piece (132) between the to-be-welded area (180) and the current collecting body (131);
welding the to-be-welded area (180) to form a welded part (140) between the connecting piece (132) and the sidewall (111);
roll-pressing a sidewall area corresponding to the welded part (140) to form a groove (113), and the groove (113) being adopted to limit an axial displacement of the electrode assembly (120);
sealing and disposing the cap (160) at the opening (112).

12. The manufacturing method according to claim 11, wherein before welding the to-be-welded area (180), an inclination angle β between the connecting piece (132) and the housing (110) is set within a range of 1° to 4°.

13. The manufacturing method according to claim 11, wherein a distance between the to-be-welded area (180) and an end wall (114) of the connecting piece (132) along an extending direction of the connecting piece (132) is greater than or equal to 0.2mm.

14. The manufacturing method according to claim 13, wherein a distance between the connecting piece (132) and the sidewall (111) is less than or equal to 0.05mm along a radial direction of the housing (110) within the to-be-welded area (180).

15. The manufacturing method according to claim 11, wherein laser welding is used when welding the to-be-welded area (180), where a laser beam generated by a welding head (160) is directed from an interior of the housing (110) towards the to-be-welded area (180), and a welding operation is performed in a tilted posture to the sidewall (111).
